(19) **Europäisches Patentamt / European Patent Office / Office européen des brevets**

(11) **EP 4 654 724 A1**

(12) **EUROPEAN PATENT APPLICATION**
published in accordance with Art. 153(4) EPC

(43) Date of publication:
26.11.2025 Bulletin 2025/48

(21) Application number: 23916696.0

(22) Date of filing: 17.01.2023

(51) International Patent Classification (IPC):
*H04W 72/25* (2023.01)

(52) Cooperative Patent Classification (CPC):
H04W 72/25

(86) International application number:
PCT/CN2023/072685

(87) International publication number:
WO 2024/152206 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• ZHAO, Zhenshan
  Dongguan, Guangdong 523860 (CN)
• ZHANG, Shichang
  Dongguan, Guangdong 523860 (CN)
• DING, Yi
  Dongguan, Guangdong 523860 (CN)
• MA, Teng
  Dongguan, Guangdong 523860 (CN)

(74) Representative: Mewburn Ellis LLP
Aurora Building
Counterslip
Bristol BS1 6BX (GB)

(54) **METHOD FOR SIDELINK TRANSMISSION AND TERMINAL DEVICE**

(57)     Provided is a method and terminal device for sidelink transmission. The method includes: a first terminal device or a second terminal device determining a first CSI-RS resource; the first CSI-RS resource is a periodic or semi persistent sidelink CSI-RS resource; the first terminal device is configured to send CSI-RS, and the second terminal device is configured to receive CSI-RS. The present embodiment proposes to determine periodic or semi persistent sidelink CSI-RS resources in a sidelink system, which helps the sidelink system achieve beam based transmission.

First terminal device or second terminal device determines first CSI-RS resource — 2010

FIG. 20

EP 4 654 724 A1

**Description**

TECHNICAL FIELD

This disclosure relates to the field of communication technology, and in particular, relates to a method for sidelink transmission and terminal device.

BACKGROUND

To enhance the transmission rate of the sidelink system, adopting a beam-based transmission approach can be considered. However, the current protocols have not yet discussed how the sidelink system should support beam-based transmission.

SUMMARY

Disclosed herein are implementations of a method for sidelink transmission and a terminal device. The following is an introduction to the various aspects involved in this disclosure.

In a first aspect, a method for sidelink transmission is provided. The method includes: a first terminal device or a second terminal device determines a first channel state information-reference signal (CSI-RS) resource, where the first CSI-RS resource is a periodic or semi-persistent sidelink CSI-RS resource, and the first terminal device is configured to transmit a CSI-RS, and the second terminal device is configured to receive the CSI-RS.

In a second aspect, a terminal device is provided. The terminal device is a first terminal device or a second terminal device. The terminal device includes a determining module. The determining module is configured to determine a first channel state information-reference signal (CSI-RS) resource, where the first CSI-RS resource is a periodic or semi-persistent sidelink CSI-RS resource, where the first terminal device is configured to transmit a CSI-RS, and the second terminal device is configured to receive the CSI-RS.

In a third aspect, a terminal device is provided. The terminal device includes a transceiver, a memory, and a processor. The memory is configured to store a program, the processor is configured to call the program stored in the memory, and control the transceiver to receive or transmit signals, to make the terminal device perform the method in the first aspect or the second aspect.

In a fourth aspect, an apparatus is provided. The apparatus includes a processor, which is configured to call a program from a memory, to make the apparatus perform the method in the first aspect or the second aspect.

In a fifth aspect, a chip is provided. The chip includes a processor configured to call a program from a memory, to make a device equipped with the chip perform the method in the first aspect or the second aspect.

In a sixth aspect, a computer-readable storage medium is provided. The computer-readable storage medium stores a program, which can cause a computer to perform the method in the first aspect or the second aspect.

In a seventh aspect, a computer program product is provided. The computer program product includes a program, which can cause a computer to perform the method in the first aspect or the second aspect.

In an eighth aspect, a computer program is provided. The computer program can cause a computer to perform the method in the first aspect or the second aspect.

According to embodiments of the disclosure, periodic or semi-persistent sidelink CSI-RS resource is determined in the sidelink system, which helps the sidelink system to achieve beam-based transmission.

BRIEF DESCRIPTION OF THE DRAWINGS

FIG. 1 is a diagram of a system architecture for a wireless communication system to which the embodiments of this application can be applied.
FIG. 2 is a scenario diagram of sidelink communication in network coverage.
FIG. 3 is a scenario diagram of sidelink communication in partial network coverage.
FIG. 4 is a scenario diagram of sidelink communication out of network coverage.
FIG. 5 is a scenario diagram of sidelink communication based on a central control node.
FIG. 6 is a diagram of a sidelink communication method based on broadcasting.
FIG. 7 is a diagram of a sidelink communication method based on unicast.
FIG. 8 is a diagram of a sidelink communication method based on multicast.
FIG. 9A is a diagram of a slot structure used in a sidelink communication system.
FIG. 9B is another diagram of a slot structure used in a sidelink communication system.

FIG. 10 is a diagram of a CSI-RS mapping method in a sidelink.

FIG. 11 is a diagram of a communication scenario in a wide-beam communication system.

FIG. 12 is a diagram of a communication scenario in a narrow-beam communication system.

FIG. 13 is a schematic flowchart of the usage of transmission configuration indication (TCI) states.

FIG. 14 is a diagram of a slot structure containing CSI-RS according to the embodiments of this application.

FIG. 15 is another diagram of a slot structure containing CSI-RS according to the embodiments of this application.

FIG. 16 is a diagram of arrangement of periodic CSI-RS resources according to the embodiments of this application.

FIG. 17 is a diagram of indication of physical resource blocks (PRBs) used for transmitting CSI-RS according to the embodiments of this application.

FIG. 18 is another diagram of indication of PRBs used for transmitting CSI-RS according to the embodiments of this application.

FIG. 19 is yet another diagram of indication of PRBs used for transmitting CSI-RS according to the embodiments of this application.

FIG. 20 is a schematic flowchart of a method for sidelink transmission according to the embodiments of this application.

FIG. 21 is a diagram of a possible arrangement of periodic CSI-RS resources according to the embodiments of this application.

FIG. 22 is a diagram of a beam selection process according to the embodiments of this application.

FIG. 23 is another diagram of a beam selection process according to the embodiments of this application.

FIG. 24 is a diagram of another possible arrangement of periodic CSI-RS resources according to the embodiments of this application.

FIG. 25 is a diagram of a beam failure determination method according to the embodiments of this application.

FIG. 26 is another schematic flowchart of a method for sidelink transmission according to the embodiments of this application.

FIG. 27 is a diagram of a method for carrying beam failure indication information according to the embodiments of this application.

FIG. 28 is another diagram of a method for carrying beam failure indication information according to the embodiments of this application.

FIG. 29 is yet another schematic flowchart of a method for sidelink transmission according to the embodiments of this application.

FIG. 30 is a diagram of a time-domain relationship between CSI-RS resources and PSFCH according to the embodiments of this application.

FIG. 31 is diagram of another time-domain relationship between CSI-RS resources and PSFCH according to the embodiments of this application.

FIG. 32 is a structural diagram of a terminal device according to the embodiments of this application.

FIG. 33 is a structural diagram of an apparatus according to the embodiments of this application

DETAILED DESCRIPTION

## **Communication System Architecture**

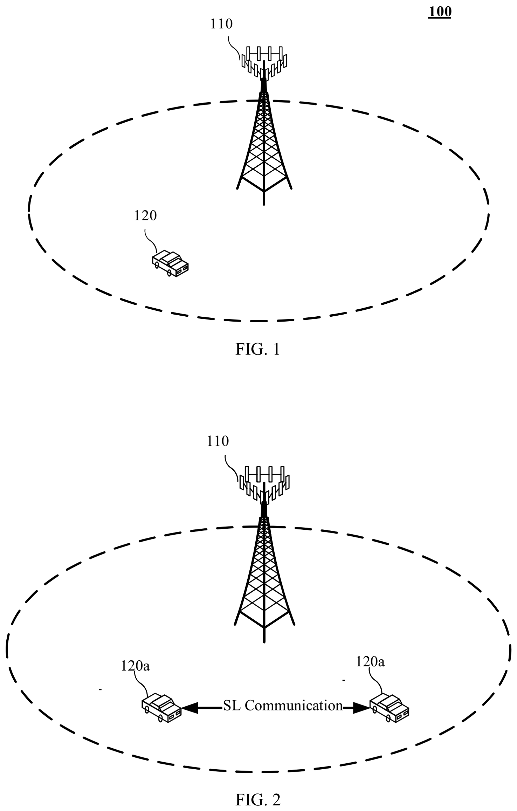

FIG. 1 is an exemplary system architecture diagram of a wireless communication system 100 to which the embodiments of this application can be applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within that coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located in the network coverage area of the network device 110, all be located out of the network coverage area of the network device 110, or some may be in the coverage area while others are out of the coverage area of the network device 110. The embodiments of this application do not limit this aspect.

Optionally, the wireless communication system 100 may further include other network entities such as a network controller, a mobility management entity, etc. The embodiments of this application do not limit this aspect.

It should be understood that the technical solutions of the embodiments of the disclosure can be applied to various communication systems, for example: the fifth generation (5G) system or new radio (NR), long term evolution (LTE) system, LTE frequency division duplex (FDD) system, LTE time division duplex (TDD), etc. The technical solutions provided in this disclosure can also be applied to future communication systems, such as the sixth-generation mobile communication system, satellite communication systems, and so on.

The terminal device in the embodiments of the disclosure may also be referred to as user equipment (UE), access terminal, user unit, user station, mobile station, mobile station (MS), mobile terminal (MT), remote station, remote terminal device, mobile device, user terminal, wireless communication device, user agent, or user device. The terminal device in the embodiments of the disclosure may be a device that provides voice and/or data connectivity to users and can be used to connect people, objects, and machines, such as handheld devices with wireless connectivity, in-vehicle devices, etc. The terminal devices in the embodiments of the disclosure may be mobile phones, tablets (Pad), laptop computers, handheld computers, mobile internet devices (MID), wearable devices, vehicles, wireless terminals in industrial control (industrial control), wireless terminals in self-driving, wireless terminals in remote medical surgery, wireless terminals in smart grids, wireless terminals in transportation safety, wireless terminals in smart cities, wireless terminals in smart homes, and so on. For example, the terminal device may act as a scheduling entity that provides sidelink (SL) signals between terminal devices in vehicle-to-everything (V2X) or device-to-device (D2D) communications. For example, cellular phones and automobiles may communicate with each other using sidelink signals. Cellular phones and smart home devices may communicate directly without relaying communication signals through a base station. Optionally, the terminal device may act as a base station.

The network device in the embodiments of the disclosure may be a device for communicating with the terminal device and may also be referred to as an access network device or a wireless access network device, such as a base station. The network device in the embodiments of the disclosure may be a wireless access network (RAN) node (or device) that connects the terminal device to the wireless network. The base station may broadly cover various names or be interchangeable with the following names: NodeB, evolved NodeB (eNB), next-generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, etc. The base station may be a macro base station, micro base station, relay node, donor node, or similar, or a combination thereof. The base station may also refer to a communication module, modem, or chip installed within the aforementioned devices or apparatuses. The base station may also be a device that performs base station functions in device-to-device (D2D), V2X, machine-to-machine (M2M) communications, a network-side device in a 6G network, a device that performs base station functions in future communication systems, etc. The base station may support networks using the same or different access technologies. The embodiments of the disclosure do not limit the specific technology and specific device form used by the network device.

The base station may be fixed or mobile. For example, a helicopter or drone may be configured to act as a mobile base station, with one or more cells moving according to the position of the mobile base station. In other examples, a helicopter or drone may be configured to act as a device that communicates with another base station.

In some deployments, the network device in the embodiments of this application may refer to a CU or DU, or the network device may include both CU and DU. The gNB may also include an AAU.

The network device and the terminal device may be deployed on land, including indoors or outdoors, handheld or vehicle-mounted; they may also be deployed on water surfaces; or they may be deployed on aircraft, balloons, and satellites in the air. The embodiments of the disclosure do not limit the scenarios where the network device and the terminal device are deployed.

## Sidelink Communication In Different Network Coverage Scenarios

Sidelink communication refers to a communication technology based on sidelink. For example, sidelink communication can be device-to-device (D2D) or vehicle-to-everything (V2X) communication. In traditional cellular systems, communication data is received or sent between terminal devices and network devices. In contrast, sidelink communication supports direct communication data transmission between terminal devices. Compared with traditional cellular communication, direct communication data transmission between terminal devices can achieve higher spectral efficiency and lower transmission latency. For example, V2X systems adopt sidelink communication technology.

In sidelink communication, depending on the network coverage situation of the terminal devices, sidelink communication can be classified into sidelink communication in network coverage, sidelink communication in partial network coverage, and sidelink communication out of network coverage.

FIG. 2 is a diagram of a sidelink communication scenario in network coverage. In the scenario illustrated in FIG. 2, both terminal devices 120a are within the coverage area of the network device 110. Therefore, both terminal devices 120a can receive the configuration signaling (which can also be referred to as configuration information in this application) from the network device 110 and determine the sidelink configuration based on the configuration signaling from the network device 110. After both terminal devices 120a have completed the sidelink configuration, they can perform sidelink communication on the sidelink.

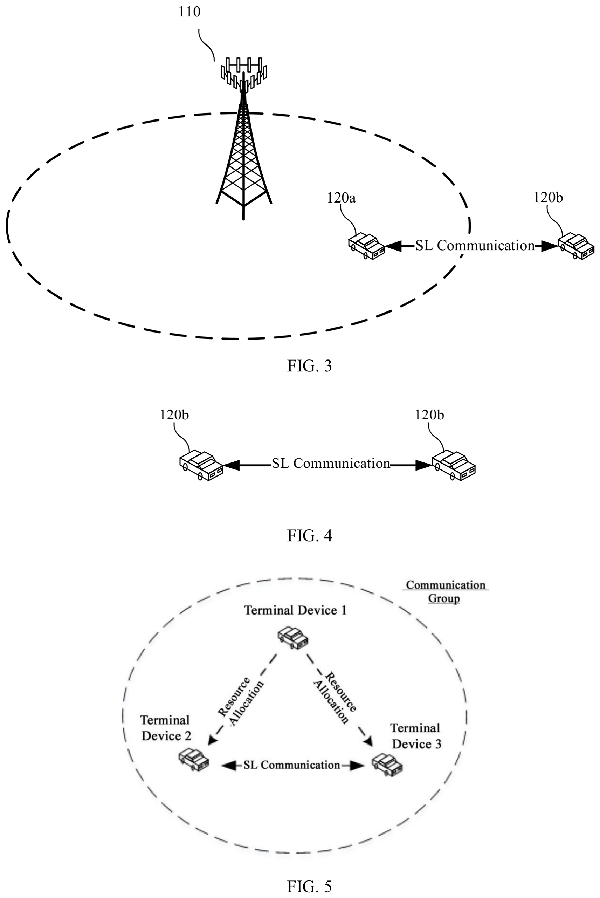

FIG. 3 is an example of a sidelink communication scenario in partial network coverage. In the scenario illustrated in FIG. 3, terminal device 120a performs sikelink communication with terminal device 120b. Terminal device 120a is within the coverage area of the network device 110 and can receive the configuration signaling from the network device 110. Terminal device 120a can determine the sidelink configuration based on the configuration signaling from the network device 110. Terminal device 120b is out of the network coverage area and cannot receive the configuration signaling from the network device 110. In this case, terminal device 120b can determine the sidelink configuration based on preconfiguration information and/or information carried in the physical sidelink broadcast channel (PSBCH) sent by terminal device 120a, which is within the network coverage area. After both terminal devices 120a and 120b have completed the sidelink configuration, they can perform sidelink communication on the sidelink.

FIG. 4 is an example of a sidelink communication scenario of out-of-network coverage. In the scenario illustrated in FIG. 4, both terminal devices 120b are out of the network coverage area. In this case, both terminal devices 120b can determine the sidelink configuration based on preconfiguration information. After both terminal devices 120b have completed the sidelink configuration, they can perform sidelink communication on the sidelink.

## Sidelink Communication Based on a Central Control Node

FIG. 5 is a scenario diagram of sidelink communication based on a central control node. In this sidelink communication scenario, multiple terminal devices can form a communication group, which has a central control node. The central control node can be one of the terminal devices in the communication group (e.g., terminal device 1 in FIG. 5), which may also be referred to as a cluster head (CH) terminal device. The central control node may be responsible for performing one or more of the following functions: establishing the communication group, managing the joining and leaving of group members in the communication group, coordinating resources within the communication group, allocating sidelink transmission resources to other terminal devices, receiving sidelink feedback information from other terminal devices, and coordinating resources with other communication groups.

## Sidelink Communication Modes

Some standards or protocols, such as the 3rd generation partnership project (3GPP), have defined two modes of sidelink communication: Mode 1 and Mode 2.

Mode 1: In this mode, the resources used by the terminal devices (also referred to as transmission resources, such as time-frequency resources) are allocated by the network device. Terminal devices can transmit data on the sidelink based on the resources allocated by the network device. The network device can allocate resources for a single transmission or semi-static transmission resources for the terminal devices. Mode 1 is applicable to scenarios where there is network device coverage, such as the scenario illustrated in FIG. 2. In this scenario, terminal device 120a is in the coverage area of the network device 110, and thus the network device 110 can allocate resources for sidelink transmission used by terminal device 120a.

Mode 2: In this mode, terminal devices can autonomously select one or more resources from a resource pool (RP). Subsequently, the terminal devices can perform sidelink transmission based on the selected resources. For example, in the scenario illustrated in FIG. 4, terminal device 120b is out of the cell coverage area. Therefore, terminal device 120b can autonomously select resources from a pre-configured resource pool for sidelink transmission. Alternatively, in the scenario illustrated in FIG. 2, terminal device 120a can also autonomously select one or more resources from a resource pool configured by the network device 110 for sidelink transmission.

## Data Transmission Methods for Sidelink Communication

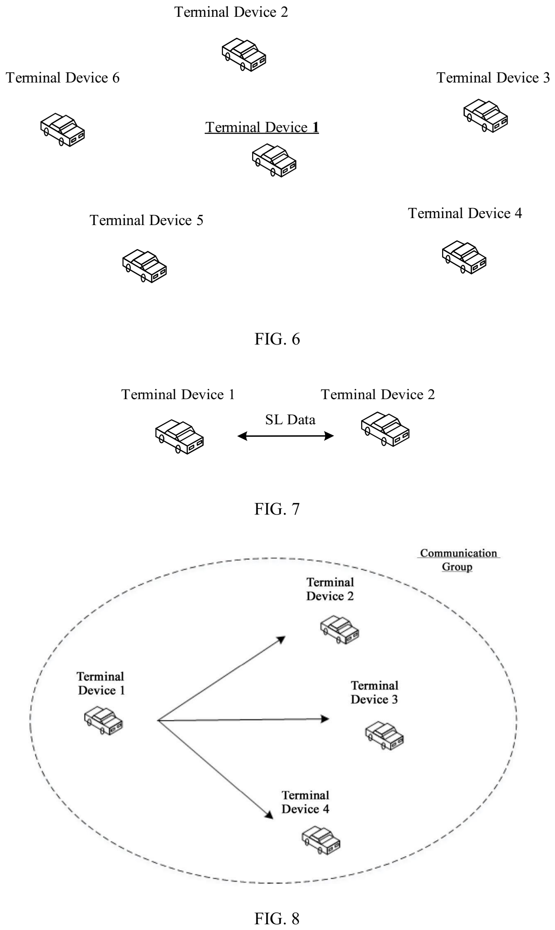

Some sidelink systems (such as long term evolution - vehicle to everything (LTE-V2X)) support a broadcast-based data transmission method (hereinafter referred to as broadcast transmission). For broadcast transmission, the receiving terminal can be any terminal device around the transmitting terminal. Taking FIG. 6 as an example, terminal device 1 is the transmitting terminal, and the corresponding receiving terminal for this transmitting terminal can be any terminal device around terminal device 1, such as terminal devices 2 to 6 in FIG. 6.

In addition to broadcast transmission, some communication systems also support unicast-based data transmission methods (hereinafter referred to as unicast transmission) and/or multicast-based data transmission methods (hereinafter referred to as multicast transmission). For example, new radio - vehicle to everything (NR-V2X) aims to support autonomous driving. Autonomous driving imposes higher requirements on data interaction between vehicles. For example, data interaction between vehicles requires higher throughput, lower latency, higher reliability, greater coverage, more flexible resource allocation methods, etc. Therefore, to enhance the performance of data interaction between vehicles, NR-V2X introduces unicast transmission and multicast transmission.

For unicast transmission, there is generally only one receiving terminal. Taking FIG. 7 as an example, terminal device 1 and terminal device 2 are engaged in unicast transmission. Terminal device 1 can be the transmitting terminal while terminal device 2 can be the receiving terminal, or terminal device 1 can be the receiving terminal while terminal device 2 can be the transmitting terminal.

For multicast transmission, the receiving terminal(s) can be a terminal device within a communication group, or it can be terminal device within a certain transmission range. Taking FIG. 8 as an example, terminal devices 1, 2, 3, and 4 form a communication group. If terminal device 1 transmits data, the other terminal devices within the group (terminal devices 2 to 4) can all be receiving terminals.

## Sidelink Communication Slot Structure

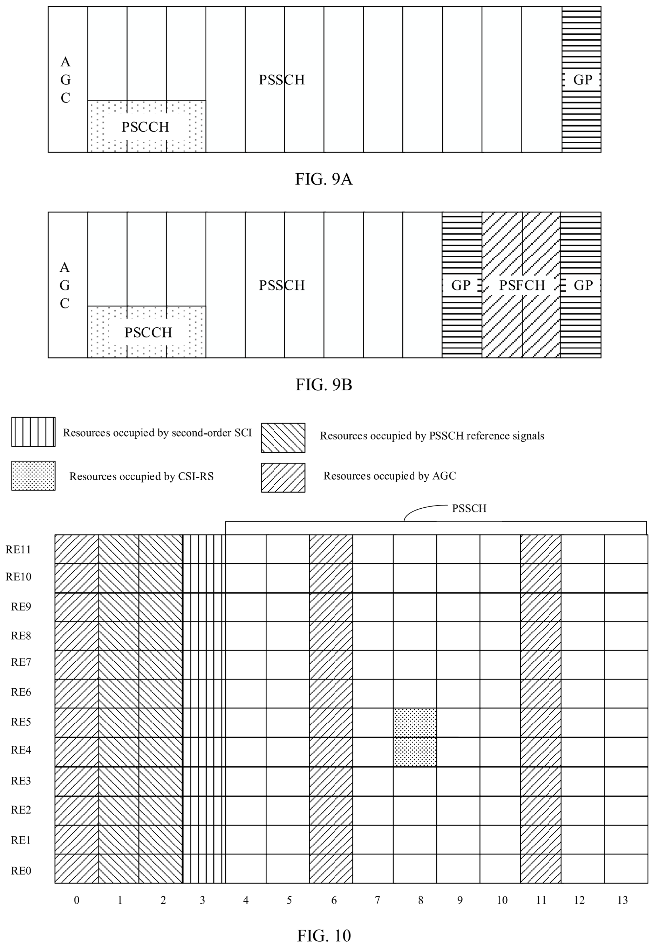

Communication systems may define the frame, subframe, or slot structure for sidelink communication. Some sidelink systems define multiple slot structures. For example, the new radio sidelink (NR SL) system defines two types of slot structures. One of these two slot structures does not include a physical sidelink feedback channel (PSFCH), as illustrated in FIG. 9A. The other slot structure includes a PSFCH, as illustrated in FIG. 9B.

In NR SL, the physical sidelink control channel (PSCCH) may start at the $2^{nd}$ sidelink symbol of a slot in the time-domain and can occupy 2 or 3 symbols (here, symbols refer to orthogonal frequency division multiplexing (OFDM) symbols) in the time-domain. The PSCCH can occupy multiple physical resource blocks (PRBs) in the frequency-domain. For example, the number of PRBs occupied by the PSCCH can be selected from the following values: {10, 12, 15, 20, 25}.

To reduce the complexity of blind detection of the PSCCH by the terminal device, typically, only one combination of symbol quantity and PRB quantity is configured for the PSCCH within a resource pool. Additionally, since NR SL uses sub-channels as the minimum granularity for PSSCH resource allocation, the number of PRBs occupied by the PSCCH must be less than or equal to the number of PRBs in a sub-channel within the resource pool.

Referring to FIG. 9A, for the slot structure that does not include a PSFCH, the physical sidelink shared channel (PSSCH) in NR SL can start at the second sidelink symbol of the slot in the time-domain. The last sidelink symbol of the slot is used as a guard period (GP), and the remaining symbols can be mapped to the PSSCH. The $1^{st}$ sidelink symbol (also referred to as the headmost or leading sidelink symbol) of the slot can be a repetition of the $2^{nd}$ sidelink symbol. Generally, the receiving terminal device uses the $1^{st}$ sidelink symbol for automatic gain control (AGC). Therefore, data on the $1^{st}$ sidelink symbol is typically not used for data demodulation. The PSSCH can occupy K sub-channels in the frequency-domain, with each sub-channel including M consecutive PRBs (the values of K and M can be predefined by the protocol, preconfigured, configured by the network device, or dependent on the terminal device implementation).

FIG. 9B illustrates the slot structure that includes a PSFCH, schematically illustrating the positions of the symbols occupied by the PSFCH, PSCCH, and PSSCH within a slot. The main difference between this slot structure and the one in FIG. 9A is that the second-to-last and third-to-last symbols of the slot are used for transmitting the PSFCH. Additionally, the symbol immediately preceding the PSFCH transmission symbols is also used as a GP. From the slot structure illustrated in FIG. 9B, it can be seen that within a slot, the last symbol is used as a GP, the second-to-last symbol is used for PSFCH transmission, and the data on the third-to-last symbol is the same as that on the second-to-last symbol used for PSFCH transmission. That is, the third-to-last symbol is used for AGC, and the data on the fourth-to-last symbol is the same as that on the last symbol, also used as a GP. Moreover, the $1^{st}$ symbol in the slot is used for AGC, and the data on this symbol is the same as that on the second symbol of the slot. The PSCCH occupies 3 symbols, and the remaining symbols can be used for PSSCH transmission.

## Sidelink CSI-RS

To better support unicast communication, the NR SL system supports Sidelink CSI-RS. The NR SL system specifies that SL CSI-RS is transmitted only when the following three conditions are met.

Condition 1: The terminal device needs to transmit the PSSCH corresponding to the SL CSI-RS, meaning that the terminal device cannot transmit only the SL CSI-RS.

Condition 2: Sidelink CSI reporting is activated via higher-layer signaling.

Condition 3: When sidelink CSI reporting is activated via higher-layer signaling, the corresponding bit in the second-order sidelink control information (SCI) transmitted by the terminal device triggers the sidelink CSI reporting.

The maximum number of ports supported by SL CSI-RS is 2. When there are two ports, the SL CSI-RS from different ports are code-division multiplexed on two adjacent resource elements (REs) within the same sidelink symbol. Within a PRB, the quantity of SL CSI-RS of each port is 1, i.e., the density is 1. Therefore, within a PRB, SL CSI-RS will appear on at most one sidelink symbol, the position of the sidelink symbol is determined by the terminal device transmitting the SL CSI-RS.

Typically, to avoid affecting the resource mapping of PSCCH and second-order SCI, SL CSI-RS should not be located on the same sidelink symbol as PSCCH and second-order SCI.

Additionally, since the channel estimation accuracy is higher for the sidelink symbol occupied by the PSSCH DM-RS, and because the SL CSI-RS of two ports will occupy two consecutive REs in the frequency-domain, SL CSI-RS should also not be transmitted on the same sidelink symbol as the PSSCH DM-RS.

In some cases, the position of the sidelink symbol occupied by SL CSI-RS can be indicated by the s1-CSI-RS-FirstSymbol parameter in the PC5 interface radio resource control (PC5-RRC) signaling. Furthermore, the position of the 1st RE occupied by SL CSI-RS within a PRB is indicated by the s1-CSI-RS-FreqAllocation parameter in the PC5 RRC. If SL CSI-RS corresponds to one port, this parameter is a 12-bit bitmap corresponding to 12 REs within a PRB. If SL CSI-RS corresponds to two ports, this parameter is a 6-bit bitmap, and in this case, SL CSI-RS occupies RE 2f(1) and RE 2f(1)+1, where f(1) represents the position of the bit with a value of 1 in the aforementioned bitmap.

The frequency-domain position occupied by SL CSI-RS is also determined by the terminal device transmitting the SL CSI-RS, and it is important to ensure that the determined frequency-domain position of SL CSI-RS does not conflict with the frequency-domain position occupied by PT-RS.

FIG. 10 illustrates the time-frequency resources occupied by SL CSI-RS. Referring to FIG. 10, assuming that the number of ports corresponding to SL CSI-RS is 2, s1-CSI-RS-FirstSymbol indicates that the position of the sidelink symbol occupied by SL CSI-RS is 8, and s1-CSI-RS-FreqAllocation indicates that the position of the 1st RE occupied by SL CSI-RS within a PRB is $[b_5, b_4, b_3, b_2, b_1, b_0]$ = [0,0,0,1,0,0].

## Multi-Beam System

Communication systems (e.g., NR systems) aim to achieve high-bandwidth communication in high-frequency bands (e.g., above 6 GHz). As the operating frequency increases, path loss during transmission also increases, which can affect the coverage capability of high-frequency systems. To effectively ensure coverage in high-frequency bands, an effective technical solution is to use large-scale antenna arrays (massive multiple-in multiple-out, massive MIMO) to form higher-gain beamforming, overcoming propagation loss and ensuring the coverage of the communication system.

Currently, common large-scale antenna arrays are millimeter-wave antenna arrays. Due to the short wavelength of millimeter-wave antenna arrays, the spacing between antenna elements can be shorter, and the aperture of the antenna elements can be smaller, allowing more physical antenna elements to be integrated into a limited two-dimensional antenna array.

Additionally, due to the limited size of millimeter-wave antenna arrays, considering hardware complexity, cost, and power consumption, digital beamforming is not feasible for millimeter-wave antenna arrays, instead, analog beamforming is typically used. Analog beamforming can enhance network coverage while also reducing the complexity of device implementation.

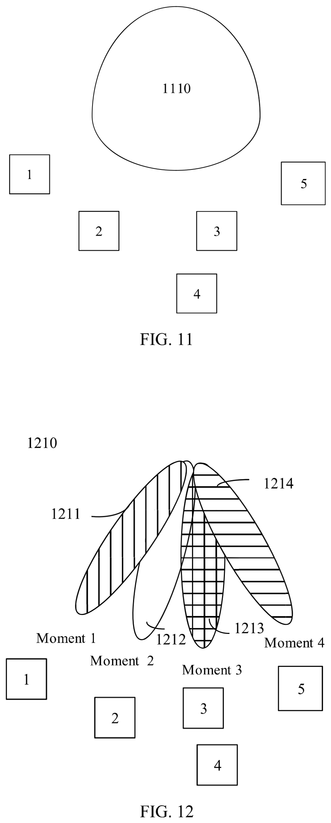

To better understand multi-beam systems, the following explanation, with reference to FIG. 11 and FIG. 12, uses the scenario of communication between a network device and a terminal device as an example to introduce the beam-based communication process.

Referring to FIG. 11, in traditional communication systems (e.g., 2G, 3G, or 4G systems), a wide beam (beam) 1110 is typically used to cover the entire cell (or "sector"). In this way, terminal devices within the cell (e.g., terminal devices 1 to 5) can communicate with the network device through this wide beam at any given moment, for example, to obtain transmission resources allocated by the network device.

Referring to FIG. 12, in more recent communication systems (e.g., 5G systems or NR systems), a multi-beam system 1210 can be used to cover the entire cell. Each beam in the multi-beam system (e.g., beams 1211 to 1214) covers a smaller area within the cell and achieves coverage of the entire cell through beam sweeping.

During the beam sweeping process, different beams cover different areas of the cell at different moments. For example, at moment 1, the communication system can cover the area where terminal device 1 is located using beam 1211. At moment 2, the communication system can cover the area where terminal device 2 is located using beam 1212. At moment 3, the communication system can cover the area where terminal devices 3 and 4 are located using beam 1213. At moment 4, the communication system can cover the area where terminal device 5 is located using beam 1214.

For multi-beam systems, the use of narrower beams allows the transmitted energy to be more concentrated, thus enabling coverage over greater distances. However, because the beams are narrower, each beam can only cover a part of the cell. Therefore, the beam sweeping process in a multi-beam system can be understood as "trading time for space".

Analog beamforming can be used not only by network devices but also by terminal devices. Moreover, analog beamforming can be used not only for signal transmission (referred to as a transmission beam) but also for signal reception (referred to as a reception beam).

Currently, different beams are identified by the different signals carried on the beams. For example, different beams can transmit different synchronization signal blocks (SSBs), allowing terminal devices to distinguish between different beams according to the SSBs. Alternatively, different beams can transmit different CSI-RS, enabling terminal devices to identify different beams according to the CSI-RS signals and/or CSI-RS resources.

In multi-beam systems, the physical downlink control channel (PDCCH) and the physical downlink shared channel (PDSCH) can be transmitted through different downlink transmission beams.

For some communication systems (e.g., systems with carrier frequencies below 6 GHz), terminal devices generally do not use analog beams. In such communication systems, terminal devices can use omnidirectional antennas (or nearly omnidirectional antennas) to receive signals transmitted by different downlink transmission beams from the network device.

For some communication systems (e.g., millimeter-wave systems), terminal devices may use analog beams. In such communication systems, terminal devices can use downlink reception beams to receive signals transmitted by the corresponding downlink transmission beams. In this case, beam indication information can be used to assist terminal devices in determining one or more of the following: information related to a transmission beam of the network device and information related to a reception beam of the terminal device.

In some communication protocols (e.g., NR-related protocols), beam indication information does not directly indicate the beam itself but rather indicates the beam through quasi co-location (QCL) between signals. On the terminal device side, determining the corresponding channel/signal is also based on the QCL assumption.

## QCL Indication/Assumption in DL Transmission

When a terminal device performs signal reception, it can improve the reception performance by utilizing the characteristics of a transmission environment corresponding to data transmission to optimize the receiving algorithm. For example, the terminal device can optimize the design and parameters of a channel estimator based on statistical characteristics of the channel. In some communication systems, such as the NR system, the characteristics of the transmission environment corresponding to data transmission can be represented by QCL information (QCL-Info).

When different transmission and receiving points (TRPs)/panels/beams are used for downlink data transmission, the characteristics of the transmission environment corresponding to data transmission may change. Therefore, in some communication systems, such as the NR system, when transmitting downlink control channels or downlink data channels, the network device can indicate corresponding QCL information to the terminal device through a transmission configuration indicator (TCI) state.

A TCI state can include the following configuration information: TCI state identity (ID), QCL information 1, and QCL information 2 (optional). The TCI state ID can be used to identify a TCI state.

QCL information can include QCL type configuration and QCL reference signal configuration. The QCL type configuration can be one of QCL-Type A, QCL-Type B, QCL-Type C, or QCL-Type D. The QCL reference signal configuration can include the cell ID where the reference signal is located, the bandwidth part (BWP), and the identifier of the reference signal (e.g., CSI-RS resource identifier or SSB index).

If both QCL information 1 and QCL information 2 are configured, at least one of QCL information 1 and the QCL information 2 must have a QCL type of QCL-Type A, QCL-Type B, or QCL-Type C, and the other one must have a QCL type of QCL-Type D. The definitions of different QCL type configurations are as follows:

QCL-Type A: {Doppler shift, Doppler spread, average delay, delay spread}
QCL-Type B: {Doppler shift, Doppler spread}
QCL-Type C: {Doppler shift, average delay}
QCL-Type D: {Spatial Rx parameters}

In the NR system, the network device can indicate a corresponding TCI state for downlink signals or downlink channels. If the network device configures the QCL reference signal of the target downlink channel or target downlink signal as SSB or CSI-RS through the TCI state, and the QCL type configuration is QCL-Type A, QCL-Type B, or QCL-Type C, the terminal device can assume that the large-scale parameters of the target downlink signal are the same as those of the SSB or CSI-RS. The contents of the large-scale parameters can be determined based on the QCL type configuration.

Similarly, if the network device configures the QCL reference signal of the target downlink channel or downlink signal as SSB or CSI-RS through the TCI state, and the QCL type configuration is QCL-Type D, the terminal device can receive the target downlink signal using the same reception beam as the SSB or CSI-RS (i.e., the same spatial Rx parameters). Generally, at the network device side, the target downlink channel (or target downlink signal) and the referenced SSB or CSI-RS are sent by the same TRP/panel/beam. If different TRPs/panels/beams are used to transmit two downlink signals (or downlink channels), different TCI states are usually configured for the two downlink signals (or downlink channels).

For downlink control channels, the TCI state corresponding to the control resource set (CORESET) of the downlink control channel can be indicated through RRC signaling or a combination of RRC signaling and medium access control (MAC) signaling.

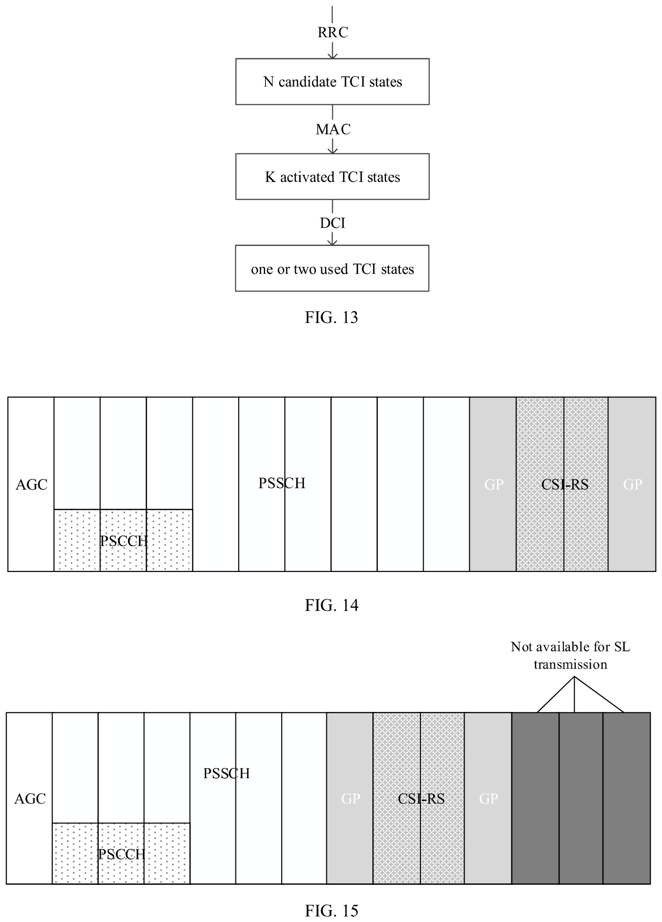

For the downlink data channel (i.e., PDSCH), as illustrated in FIG. 13, the available TCI state set for the downlink data channel can be indicated through RRC signaling, and part of the TCI states can be activated through MAC layer signaling. Finally, one or two TCI states are indicated from the activated TCI states through the TCI state indication field in the DCI, for the downlink data channel scheduled by the DCI.

To improve the transmission rate of the sidelink system, it is possible to consider adopting a beam-based transmission method in the sidelink system. For example, the sidelink system can be extended to the millimeter-wave band, and then analog beamforming can be used for sidelink transmission to enhance the transmission rate and network coverage of the sidelink system.

If the sidelink system adopts a beam-based transmission method, the terminal device as the transmitter can perform sidelink transmission based on the transmission beam; and/or, the terminal device as the receiver can perform sidelink reception based on the reception beam. In some cases, the above-mentioned transmission beam can also be referred to as a spatial domain transmission filter, a transmitting-end spatial domain transmission filter, a spatial domain transmission filter for transmission, or other names. Correspondingly, the aforementioned reception beam may also be referred to as a spatial domain receive filter, a receiving-end spatial domain transmission filter, a spatial domain transmission filter for reception, or other names. In other cases, the aforementioned transmission beam may also be referred to as a spatial domain transmission parameter, and correspondingly, the aforementioned reception beam may also be referred to as a spatial domain reception parameter. For ease of understanding, the embodiments of the disclosure mainly illustrate with the example of transmission beam/reception beam. The transmission beam can be interchangeably used with the spatial domain transmission filter or the spatial domain transmission parameter, and the reception beam can be interchangeably used with the spatial domain receive filter, or the spatial domain reception parameter.

Introducing a beam-based transmission method into the sidelink system has many advantages. However, the current protocols have not yet discussed how to specifically implement beam-related operations in the sidelink system.

The following text, in combination with multiple embodiments, provides problems that need to be considered and corresponding solutions for implementing beam-related operations in the sidelink system. It should be understood that the following text mainly describes from the perspective of a first terminal device and a second terminal device. The first terminal device refers to the transmitting end of the beam, and the second terminal device refers to the receiving end of the beam. The first terminal device and/or the second terminal device can be the terminal device described in any of the preceding embodiments, such as the terminal device 120 mentioned earlier.

### Embodiment 1: CSI-RS Transmission

In the sidelink system, beam-based transmission can be implemented by transmitting CSI-RS.

If beam-based transmission is implemented based on CSI-RS, the process of determining the transmission beam of the first terminal device may proceed as follows. First, the first terminal device successively transmits CSI-RS using different transmission beams. Correspondingly, the second terminal device can receive the multiple CSI-RS transmitted by the first terminal device using the same reception beam and perform measurements on the received CSI-RS. Then, the second terminal device can select the optimal CSI-RS and feed back the CSI-RS resource information of the optimal CSI-RS (such as the CSI-RS resource index) to the first terminal device. That is to say, the transmission beam corresponding to the CSI-RS resource information is the optimal transmission beam selected by the second terminal device. From the above, it can be seen that the first terminal device needs to transmit multiple CSI-RS in the process of determining the transmission beam.

If beam-based transmission is implemented based on CSI-RS, the process of determining the reception beam of the second terminal device may proceed as follows. First, the first terminal device can transmit multiple CSI-RS using the same transmission beam. Optionally, the first terminal device can transmit CSI-RS using the optimal transmission beam relative to the second terminal device. The second terminal device can successively use different reception beams to receive the CSI-RS transmitted by the first terminal device and perform measurements on the received CSI-RS. Then, the second terminal device can select the optimal reception beam from the reception beams based on the measurement results of the received CSI-RS. When the first terminal device performs sidelink transmission using the optimal transmission beam, the second terminal device can perform sidelink reception using the optimal reception beam. Optionally, the first terminal device can perform the above process for different transmission beams separately, thereby determining the optimal reception beam corresponding to each transmission beam respectively. Therefore, when the first terminal device performs sidelink transmission, the first terminal device can indicate to the second terminal device the transmission beam used for the sidelink transmission, and correspondingly, the second terminal device can determine the optimal reception beam corresponding to the current transmission beam of the first terminal device and perform sidelink reception using the optimal reception beam. From the above, it can be seen that the first terminal device needs to transmit multiple CSI-RS in the process of determining the reception beam.

In some implementations, the transmission mechanism of CSI-RS can adopt the transmission method described in the "Sidelink CSI-RS" section above, that is, one CSI-RS is transmitted in one slot, and the CSI-RS is transmitted simultaneously with the PSSCH. However, this CSI-RS transmission mechanism can only transmit one CSI-RS in one slot, and the CSI-RS and PSSCH are transmitted simultaneously. When multiple CSI-RS need to be transmitted, this CSI-RS transmission mechanism will reduce transmission efficiency. This is because, in the process of beam selection, the first terminal device and the second terminal device have not yet determined the optimal transmission beam or reception beam, and the two terminal devices will not perform normal data transmission. Therefore, the PSSCH transmitted in the beam selection process usually does not carry normal sidelink data but only fills redundant bits, padding bits, etc., thereby reducing transmission efficiency.

In addition, when the first terminal device operates in Mode 2, the first terminal device determines the transmission resources based on listening. During the process of listening and selecting transmission resources, mechanisms such as re-evaluation and pre-emption may cause the first terminal device to reselect resources, thereby preventing the second terminal device from accurately knowing the resources used to transmit CSI-RS by the first terminal device. In the process of determining the reception beam, the second terminal device needs to receive the CSI-RS resources transmitted by the first terminal device using different beams, so the second terminal device needs to accurately know the time-domain position of the CSI-RS resources transmitted by the first terminal device. However, it is difficult to achieve this purpose based on the existing CSI-RS transmission mechanism.

Therefore, in some implementations, the transmission mechanism of CSI-RS can adopt the following transmission mechanism: the first terminal device transmits one CSI-RS in one slot, and the CSI-RS occupies the second-to-last and third-to-last symbols among the symbols in the slot that are available for sidelink transmission. That is, a transmission method similar to the time-domain structure of the PSFCH in the NR SL system can be used to transmit the CSI-RS.

In some embodiments, the CSI-RS may not be transmitted together with the PSCCH/PSSCH of the first terminal device, that is, the CSI-RS may not be transmitted in the same slot as the PSCCH/PSSCH.

In some embodiments, the second-to-last symbol in a slot available for sidelink transmission may be used to carry the CSI-RS, and the third-to-last symbol in the slot available for sidelink transmission may be used for AGC adjustment by the second terminal device.

In some embodiments, the data transmitted on the second-to-last and third-to-last symbols in a slot available for sidelink transmission are the same.

In some embodiments, a symbol following the last symbol used for CSI-RS transmission in a slot may be a GP symbol.

In some embodiments, a symbol preceding the 1st symbol used for CSI-RS transmission in a slot may be a GP symbol.

As illustrated in FIG. 14, the CSI-RS is carried on the second-to-last and third-to-last symbols of the slot. A GP symbol is located before the CSI-RS and a GP is located after the CSI-RS. The slot also includes PSCCH/PSSCH, and the terminal device transmitting the PSCCH/PSSCH may be different from the terminal device transmitting the CSI-RS. It should be understood that FIG. 14 is merely an exemplary illustration of the slot structure containing the CSI-RS and does not specifically define the frequency-domain relationship between the CSI-RS and the PSCCH, PSSCH.

When only part of the symbols in a slot are available for sidelink transmission, the CSI-RS may occupy the second-to-last and third-to-last symbols among the symbols available for sidelink transmission. As illustrated in FIG. 15, if the last three symbols in a slot are not available (not used) for sidelink transmission and the remaining 11 symbols are available for sidelink transmission, the CSI-RS may occupy the second-to-last and third-to-last symbols among these 11 symbols.

## **Embodiment** 2: CSI-RS **Configuration**

In some implementations, the transmission resources for CSI-RS are determined based on configuration information. For ease of description, this configuration information is hereinafter referred to as configuration information A.

In some implementations, configuration information A may include one or more of the following: resource pool configuration information, sidelink BWP configuration information, or PC5-RRC signaling.

In some implementations, configuration information A may include CSI-RS resource set configuration information.

In some implementations, the CSI-RS resource set configuration information includes a "repetition" parameter. For example, the resource pool configuration information, sidelink BWP configuration information, or PC5-RRC may include one or more of the following: at least one first CSI-RS resource set with the "repetition" parameter set to "off" and at least one second CSI-RS resource set with the "repetition" parameter set to "on". The first CSI-RS resource set may be used to determine the transmission beam, while the second CSI-RS resource set may be used to determine the reception beam.

In some implementations, the resource pool configuration information, sidelink BWP configuration information, or PC5-RRC includes CSI reporting configuration information (e.g., CSI-ReportConfig). The CSI reporting configuration information may be used to configure the report quantity (reportQuantity) (or feedback type). The report quantity (or feedback type) may include one or more of the following: "cri" (CSI-RS resource indicator), "cri-RSRP" (CSI-RS resource indicator and reference signal receiving power, RSRP), "cri-SINR" (CSI-RS resource indicator and signal to interference plus noise ratio, SINR), "none" (not reporting), slot indication information, slot indication information and RSRP, slot indication information and SINR. The slot indication information mentioned here may be used to determine the time-domain unit where the selected CSI-RS resource is located.

In some implementations, a CSI-RS resource set is associated with one or more report quantities.

In some implementations, a CSI-RS resource within a CSI-RS resource set is associated with one or more report quantities.

For example, in the resource pool configuration information, one or more CSI-RS resource sets (CSI-RS-ResourceSet) are configured, with each resource set configuration information containing a CSI-RS resource set identifier (CSI-RS-ResourceSetId), CSI-RS resource(CSI-RS-Resource) configuration information, and "repetition" parameter configuration information. Additionally, one or more CSI reporting configuration information may be configured in the resource pool configuration information, with each CSI reporting configuration information containing a CSI report configuration identifier (CSI-ReportConfigId) and parameters such as report quantity. Furthermore, a CSI-RS resource set identifier may be included in the CSI reporting configuration information, or a CSI report configuration identifier may be included in the CSI-RS resource set configuration information. Based on the inclusion relationship between the CSI reporting configuration information and the CSI-RS resource set identifier, the CSI-RS resource set and the CSI report-quantity can be associated.

It should be noted that the standard may not describe the process of determining the transmission beam or reception beam. The process of determining the transmission beam or reception beam may be reflected in the first terminal device sending indication information to the second terminal device to indicate the CSI-RS resource set information being transmitted, and the purpose of transmitting the CSI-RS resource can be indicated by the parameters related to the CSI-RS resource set information.

By way of example, the resource pool configuration information configures two CSI-RS resource sets, with the "repetition" parameter of the one CSI-RS resource set is set to "off" and the "repetition" parameter of the other CSI-RS resource set is set to "on". When the first terminal device sends indication information to the second terminal device to indicate using the CSI-RS resource set with the "repetition" parameter set to "off", the second terminal device may assume that the first terminal device uses different transmission beams to transmit the CSI-RS resources, alternatively, the second terminal device may assume that the first terminal device does not use the same transmission beam to transmit the CSI-RS resources. In this case, the second terminal device may perform measurement on the CSI-RSs transmitted by the first terminal device and report the index of the selected CSI-RS resource and/or the measurement results to the first terminal device, thereby enabling the first terminal device to determine the transmission beam.

Alternatively, when the first terminal device sends indication information to the second terminal device to indicate using the CSI-RS resource set with the "repetition" parameter set to "on", the second terminal device may assume that the first terminal device uses the same transmission beam to transmit the CSI-RSs. In this case, the second terminal device may use different reception beams to receive the CSI-RSs transmitted by the first terminal device and perform measurement on the received CSI-RS. The second terminal device may then select the reception beam based on the measurement result. After selecting the reception beam, the second terminal device typically does not need to report the selected reception beam to the first terminal device. It should be noted that there are various ways for the first terminal device to send indication information to the second terminal device to indicate the value of the "repetition" parameter (i.e., "off" or "on"). For example, the SCI sent by the first terminal device includes an information field containing a 1-bit value. If the 1-bit value is 1, it indicates using the CSI-RS resource set with the "repetition" parameter set to "off"; if the 1-bit value is 0, it indicates using the CSI-RS resource set with the "repetition" parameter set to "on". Alternatively, the value of the 1-bit information may directly correspond to "off" or "on", indicating using the respective CSI-RS resource set. For instance, the SCI may include an information field that indicates the identifier of the CSI-RS resource set to be used. By referring to the value of the "repetition" parameter in the configuration information of the CSI-RS resource set corresponding to this identifier, it can be determined whether the first terminal device is triggering the process of determining the transmission beam of the first terminal device or the process of determining the reception beam of the second terminal device. In addition to being carried in the SCI, the indication information may also be carried in PC5-RRC or a medium access control control element (MAC CE).

By way of example, the resource pool configuration information configures two CSI-RS resource sets and also configures CSI report-quantity associated with the CSI-RS resource sets. The CSI report-quantity associated with the first CSI-RS resource set is "cri-RSRP", and the CSI report-quantity associated with the second CSI-RS resource set is "none". When the first terminal device sends indication information to the second terminal device to indicate a CSI report-quantity of "cri-RSRP", it means that the first terminal device will transmit CSI-RS resources from the first CSI-RS resource set. In this case, the second terminal device may assume that the first terminal device uses different transmission beams to transmit the CSI-RSs, or the second terminal device may assume that the first terminal device does not use the same transmission beam to transmit the CSI-RSs. Therefore, the second terminal device may perform measurement on the CSI-RSs and feed back the index of the selected CSI-RS resource and/or the measurement result, enabling the first terminal device to determine the transmission beam. Alternatively, when the first terminal device sends indication information to the second terminal device to indicate a CSI report-quantity of "none", it means that the first terminal device will transmit CSI-RS resources from the second CSI-RS resource set. In this case, the second terminal device may assume that the first terminal device uses the same transmission beam to transmit the CSI-RSs. Therefore, the second terminal device may use different reception beams to receive the CSI-RSs. Then, the second terminal device may perform measurement the received CSI-RS and select the reception beam based on the measurement result, thereby completing the process of selecting the reception beam.

In some implementations, configuration information A may include CSI-RS resource set identifier information. The CSI-RS resource set identifier information may be used to identify a CSI-RS resource set.

In some implementations, configuration information A may include CSI-RS resource identifier information. The CSI-RS resource identifier information may be used to identify a CSI-RS resource. One CSI-RS resource set may include K (where K≥1) CSI-RS resources, and the CSI-RS resource identifier information can be used to identify each CSI-RS resource within the CSI-RS resource set.

In some implementations, configuration information A may include a CSI report configuration identifier. The CSI report configuration identifier may be used to indicate the CSI report-quantity. Furthermore, the CSI report configuration identifier may be used to associate a CSI-RS resource set or a CSI-RS resource with a CSI report-quantity.

In some implementations, configuration information A may include a "repetition" parameter. For example, the "repetition" parameter may be included in the CSI-RS resource set configuration information, and the value of the "repetition" parameter can be a first value (e.g., "off") or a second value (e.g., "on"). When a CSI-RS resource set with the "repetition" parameter being the first value is used, the second terminal device may assume that the first terminal device does not use the same transmission beam to send the CSI-RSs. Alternatively, the second terminal device may assume that the first terminal device uses different transmission beams to send the CSI-RSs. When a CSI-RS resource set with the "repetition" parameter being the second value is used, the second terminal device may not assume that the first terminal device uses different transmission beams to send the CSI-RSs. Alternatively, the second terminal device may assume that the first terminal device uses the same transmission beam to send the CSI-RS. Optionally, the "repetition" parameter may be included in the CSI-RS resource set only when the report quantity (or feedback type) associated with the CSI-RS resource set is set to RSRP (e.g., "cri-RSRP", or slot indication information and RSRP), SINR (e.g., "cri-SINR", or slot indication information and SINR), slot indication information, or not reporting ("none").

In some implementations, configuration information A may include QCL type indication information. This QCL type indication information may be used to indicate the QCL type between CSI-RS resources within a CSI-RS resource set. For example, possible values of the QCL type indication information may include: {QCL-TypeA, QCL-TypeB, QCL-TypeC, QCL-TypeD}. When the value of the QCL type indication information is QCL-TypeD, it indicates that all CSI-RS resources within the CSI-RS resource set have a QCL-TypeD relationship. Alternatively, the QCL type indication information may be used to indicate whether the QCL type of the CSI-RS resources within the CSI-RS resource set is QCL-TypeD. The value of the QCL type indication information may be TRUE or FALSE.

In some implementations, configuration information A may include a "purpose" parameter. This parameter may be used to indicate whether the CSI-RS resource is used for one or more of the following: beam failure detection, transmission beam determination, reception beam determination, new beam selection, CSI measurement or reporting, and radio link failure (RLF) detection.

In some implementations, configuration information A may include a "resource type" parameter. This parameter may be used to indicate whether the CSI-RS resource is aperiodic, semi-persistent, or periodic. If the CSI-RS resource is periodic, the terminal device may utilize the configured CSI-RS resource after receiving it. If the CSI-RS resource is semi-persistent, the terminal device may utilize the configured CSI-RS resource only after receiving it and also receiving an activation signal (e.g., carried by SCI or MAC CE).

In some implementations, configuration information A may include time-domain related configuration information for CSI-RS resource. For ease of description, this time-domain related configuration information for CSI-RS resource is hereinafter referred to as configuration information B.

In some implementations, configuration information B may include period indication information (which may also be referred to as a period parameter). This period indication information may be used to determine the period of the CSI-RS resource. The period of the CSI-RS resource may be expressed in terms of the number of slots. For example, if the period value indicated by the period indication information is P, it may indicate that there is one slot containing a CSI-RS occurs in every P slots. For instance, P may be {1, 2, 4, 8}, which means that there is one slot containing a CSI-RS occurs in every 1/2/4/8 slots.

In some embodiments, configuration information B may include a slot offset indication information. This slot offset indication information may be used to determine the slot offset of the CSI-RS resource. The slot offset value may be expressed in terms of the number of slots. The slot offset value may indicate an offset of the 1st slot containing the CSI-RS resource relative to the 1st slot within one system frame number (SFN) period or one direct frame number (DFN) period. Alternatively, the slot offset value may indicate the offset of the 1st slot containing the CSI-RS resource relative to the 1st slot in a resource pool within one SFN period or one DFN period. One SFN period or one DFN period may include $10240 \times 2^{\mu}$

slots. The parameter $\mu$ may be determined based on the subcarrier spacing, as illustrated in Table 1.

Table 1

| $\mu$ | $\Delta f = 2^{\mu} \cdot 15$ [kHz] |
|---|---|
| 0 | 15 |
| 1 | 30 |
| 2 | 60 |
| 3 | 120 |

For example, if the slot offset indication information indicates that a slot offset is 2 slots, when P=4, there is one slot containing a CSI-RS resource in every 4 slots, and within one SFN period, the 1st slot containing the CSI-RS resource is located at slot 2. Here, P denotes the period value of the CSI-RS resource.

Optionally, if the configuration information related to the CSI-RS resource does not include the slot offset indication information, when $k$ mod $P$=0, the terminal device expects that the slot $t'^{SL}_k$ includes a CSI-RS resource or a CSI-RS transmission opportunity. Herein, $t'^{SL}_k$ ($0 \leq k < T'_{max}$) represents the slot in the resource pool, and $T'_{max}$ represents the total number of slots in the resource pool within 10240ms; $P$ represents the period value of the CSI-RS resource.

In some implementations, the configuration information B may include a minimum time interval. This minimum time interval may be represented in terms of the number of slots. This parameter may indicate the minimum time interval between the 1st CSI-RS resource and its associated SCI, PSCCH, MAC CE, or indication information. The indication information mentioned here may be used to indicate that the first terminal device will transmit the CSI-RS resource. Alternatively, the indication information may be used to activate the configured CSI-RS resource, and SCI, PSCCH, or MAC CE may be used to trigger transmission of the CSI-RS.

For example, the minimum time interval is denoted as *a*. It may indicate that the 1st CSI-RS is located in the 1st slot containing the CSI-RS resource after slot *n+a*. Alternatively, it may indicate that the slot of the 1st CSI-RS is not earlier than the 1st slot containing the CSI-RS resource after slot *n+a*. The value of *a* mentioned here may be determined according to the protocol predefinition, preconfiguration information, configuration information from the network device, PC5-RRC signaling, indication information from the first terminal device, or indication information from the second terminal device. The indication information sent by the first terminal device may be carried by SCI, MAC CE, or PC5-RRC signaling. The indication information sent by the second terminal device may be carried by SCI, MAC CE, or PC5-RRC signaling. The slot *n* mentioned here may represent the slot in which the SCI, PSCCH, MAC CE, or indication information associated with the CSI-RS resource is located.

For example, when the minimum time interval *a*=2, the first terminal device sends the indication information in slot *n*, and the indication information indicates that the first terminal device will transmit the CSI-RS, then the slot of the CSI-RS may be slot *n+2*, or it may be the 1st slot containing the CSI-RS resource in the resource pool after slot *n+2*.

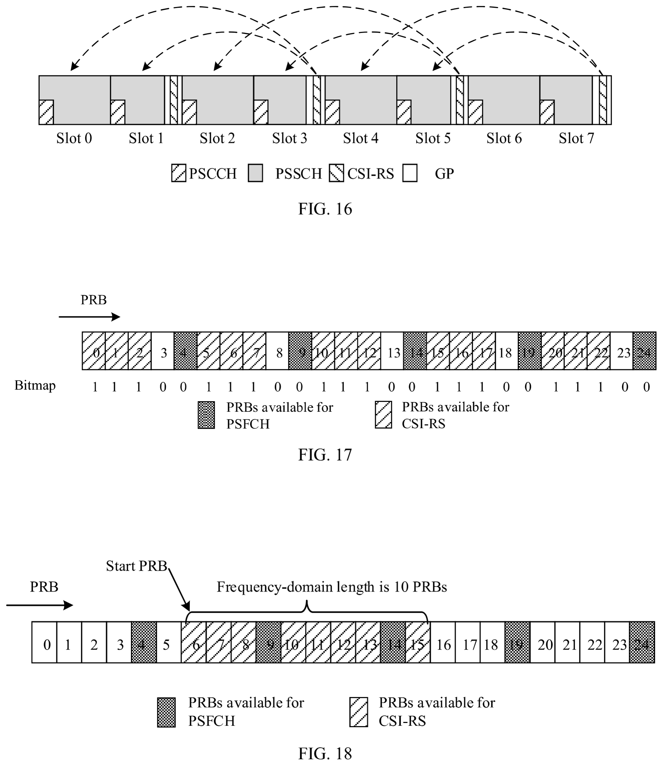

As illustrated in FIG. 16, the period of the CSI-RS resource is 2 slots, the slot offset of the CSI-RS resource is 1 slot, and the minimum time interval a=2. When indication information sent by the first terminal device in slot 0 or slot 1 indicates that the terminal device will transmit the CSI-RS, the 1st CSI-RS resource is located in slot 3. Similarly, if SCI indication sent by the first terminal device in slot 2 or slot 3 indicates the terminal device will transmit CSI-RS, the 1st CSI-RS resource is located in slot 5, and so on.

Optionally, the minimum time interval indicates the minimum time interval between the 1st CSI-RS resource in the at least one CSI-RS resource associated with the indication information and the slot in which the indication information is located.

In some implementations, the configuration information B may include: the time interval between adjacent two CSI-RS resources transmitted by the first terminal device. When the first terminal device indicates the transmission of CSI-RS through SCI (or indication information), multiple CSI-RS resources will be transmitted by the first terminal device during the process of determining the transmission beam or determining the reception beam. The time-domain position of the 1st CSI-RS resource can be determined according to the indication of the SCI. Furthermore, based on this parameter, the time interval between adjacent two CSI-RS resources can be determined, thereby determining the time-domain positions of the multiple CSI-RS resources.

Optionally, the time interval T1 between adjacent two CSI-RS resources transmitted by the first terminal device can be represented in terms of the number of slots or the number of periods the CSI-RS resource. For example, T1 = {1,2,6,8} slots. Alternatively, if the period of the CSI-RS resource P=2 slots, then T1 ={1,2,3,4} CSI-RS resource periods.

For example, the time interval T1 between adjacent two CSI-RS resources transmitted by the first terminal device is 4 slots, and an SCI indicating the transmission of 4 CSI-RS resources is sent in slot n. In this case, the 1st CSI-RS resource is located in slot n+2. Furthermore, combining this time interval T1, the slots of the 4 CSI-RS resources can be determined as: slot n+2, slot n+6, slot n+10, and slot n+14.

Optionally, if this parameter (i.e., the time interval between adjacent two CSI-RS resources transmitted by the first terminal device) is not configured, it can indicate that the time interval between adjacent CSI-RS resources is 1 CSI-RS period, meaning that the first terminal device transmits CSI-RS resources in consecutive CSI-RS periods.

For example, the first terminal device does not configure this parameter, the period of the CSI-RS resource is 2 slots, and an SCI indicating the transmission of 4 CSI-RS resources is sent in slot n. In this case, the 1st CSI-RS resource can be determined to be located in slot n+2. Furthermore, based on this parameter (since the first terminal device does not configure this parameter, the value of this parameter is 1 CSI-RS period), the 4 slots of the CSI-RS resources can be determined as: slot n+2, slot n+4, slot n+6, and slot n+8.

Optionally, in the time-domain related configuration information of the CSI-RS resource, the number of slots can refer to the number of logical slots in the resource pool.

In some implementations, the configuration information A may include the frequency-domain related configuration information of the CSI-RS resource. For ease of description, the frequency-domain related configuration information of the CSI-RS resource is hereinafter referred to as configuration information C.

In some implementations, the configuration information C may include the frequency-domain resource indication information of the CSI-RS resource. This frequency-domain resource indication information may include information for indicating the PRBs available for transmitting the CSI-RS. For example, the PRBs available for transmitting the CSI-RS can be indicated in the following method 1 or method 2.

Method 1: an indication method based on a bitmap

Each bit in the bitmap corresponds to one PRB or one subcarrier. The length of the bitmap is based on one or more of the following: sidelink carrier, sidelink BWP, and frequency-domain range of the current resource pool.

As illustrated in FIG. 17, the sikelink system may include 25 PRBs, where PRBs 4/9/14/19/24 have been allocated for PSFCH transmission. A bitmap with the length of 25 can be used to indicate PRBs available for CSI-RS transmission, that is, PRBs 0/1/2/5/6/7/10/11/12/15/16/17/20/21/22 in FIG. 17.

Method 2: an indication method based on a frequency-domain start position and a frequency-domain length

For example, the frequency-domain start position and the frequency-domain length can be indicated separately, or they can also be jointly indicated. For instance, the resource indicator value (RIV) can be determined based on the frequency-domain start position and the frequency-domain length. The RIV value can be included in the configuration information C, and the corresponding frequency-domain start position and frequency-domain length can be determined based on this RIV value.

Optionally, the frequency-domain start position can represent a frequency-domain offset relative to a first frequency-domain position. The first frequency-domain position can be the frequency-domain start position of the sidelink BWP or the frequency-domain start position of the resource pool.

Optionally, the frequency-domain end position can be determined based on the frequency-domain start position and the frequency-domain length. If a PRB for PSFCH transmission is included between the frequency-domain start position and the frequency-domain end position, this PRB may not be used for transmitting CSI-RS. That is to say, the PRBs for transmitting CSI-RS may not include the PRBs configured for PSFCH transmission.

As illustrated in FIG. 18, the sidelink system includes 25 PRBs, among which PRBs 4, 9, 14, 19, and 24 have been allocated for PSFCH transmission. Among these 25 PRBs, the start PRB for transmitting CSI-RS is PRB 6, with a frequency-domain length of 10 PRBs. Therefore, the PRB range for transmitting CSI-RS can be determined as PRBs 6 to 15. However, within PRBs 6 to 15, PRBs 9 and 14 have already been used for PSFCH transmission, so these two PRBs cannot be used for transmitting CSI-RS. Ultimately, the PRBs available for transmitting CSI-RS include PRBs with indices {6, 7, 8, 10, 11, 12, 13, 15}.

Alternatively, the frequency-domain length may indicate the total number of PRBs used for transmitting CSI-RS. If a PRB for PSFCH transmission is encountered during determining the CSI-RS frequency-domain resource, this PRB may be skipped, and the next PRB is checked to see if it is available for transmitting CSI-RS, until the number of determined PRBs equals the number of PRBs indicated by the frequency-domain length.

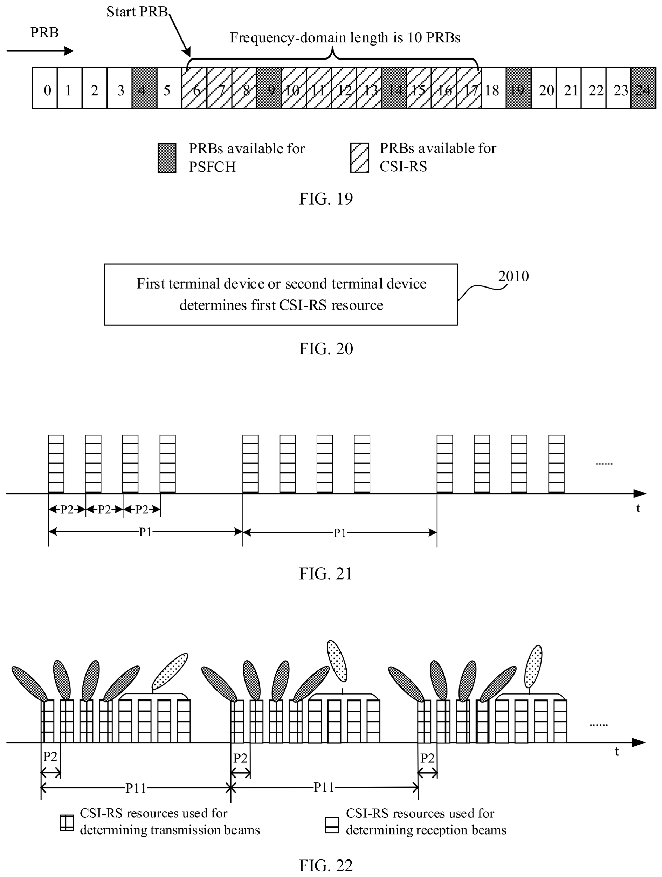

As illustrated in FIG. 19, the sidelink system includes 25 PRBs, among which PRBs 4, 9, 14, 19, and 24 have been allocated for PSFCH transmission. Among these 25 PRBs, the start PRB for transmitting CSI-RS is PRB 6, with a frequency-domain length of 10 PRBs. Starting from PRB 6, determine the PRBs available for transmitting CSI-RS. Since PRBs 9 and 14 have already been allocated for PSFCH transmission, these two PRBs cannot be used for transmitting CSI-RS and can be skipped. The other PRBs are then checked for availability. Based on this method, the 10 PRBs finally determined for transmitting CSI-RS include PRBs with indices {6, 7, 8, 10, 11, 12, 13, 15, 16, 17}.

In some embodiments, the configuration information C may include information indicating the frequency-domain resource included in each CSI-RS resource, or information indicating the minimum frequency-domain resource size included in each CSI-RS resource. This information may be necessary because when CSI-RS is transmitted together with PSCCH/PSSCH, the frequency-domain size of the CSI-RS resource can be determined based on the frequency-domain size of an associated PSSCH. If CSI-RS is not transmitted together with PSCCH/PSSCH (as illustrated in the transmission methods in FIG. 14 and FIG. 15 above), the size of the frequency-domain resource used for transmitting CSI-RS needs to be determined separately.

Optionally, the configuration information C may include indication information. This indication information may be used to indicate the number of PRBs (or subchannels) included in the CSI-RS frequency-domain resource. Alternatively, the indication information may indicate the minimum number of PRBs (or subchannels) included in the CSI-RS frequency-domain resource. For example, the indication information may indicate the number of PRBs. If the CSI-RS resource configuration information includes this indication information and such indication information indicates 12 PRBs, this means that each CSI-RS resource occupies 12 PRBs.

Optionally, the frequency-domain resource included in each CSI-RS resource may be N subchannels (where a subchannel is the granularity for PSSCH resource allocation). N may be greater than or equal to 1. For example, N = 1.

Optionally, the size of the configured frequency-domain resource available for transmitting CSI-RS should be divisible by the size of the frequency-domain resource included in each CSI-RS, so that the configured frequency-domain resource available for transmitting CSI-RS can accommodate an integer number of CSI-RS resources, and the size of the frequency-domain resource included in each CSI-RS is the same.

In some implementations, the configuration information C may include the interval between adjacent PRBs of the CSI-RS resource. Optionally, rather than mapping the CSI-RS to all PRBs in the frequency-domain resource included in the CSI-RS resource, the interval between adjacent PRBs for mapping the CSI-RS may be indicated through the configuration information. For example, if the 1st PRB for mapping the CSI-RS is PRB 2 and the interval between adjacent PRBs for mapping the CSI-RS is 4 PRBs, then the CSI-RS may be mapped to PRB 2, PRB 6, PRB 10, PRB 14, and so on. Optionally, if this parameter (i.e., the interval between adjacent PRBs of the CSI-RS resource) is not configured, the CSI-RS may be continuously mapped to the available PRBs for transmitting CSI-RS.

In some implementations, the configuration information C may include indication information for determining the frequency-domain position of the CSI-RS resource within a PRB. This indication information may be used to indicate which REs within a PRB are used for transmitting CSI-RS. For example, the REs within a PRB that can be used for transmitting CSI-RS may be indicated in the form of a bitmap.

In some implementations, the configuration information C may include the CSI-RS density. This parameter may be used to indicate the number of REs occupied by the CSI-RS per antenna port within each PRB. For example, if the CSI-RS density is 2, it may indicate that the CSI-RS per antenna port occupies 2 REs within each PRB.

When the CSI-RS density is less than 1, the configuration information C may further include PRB information for mapping the CSI-RS resource. For example, if the CSI-RS density is 0.5, meaning that each antenna port occupies 1 RE every 2 PRBs. The configuration information C may further include an indication information, which indicates the PRB information for mapping the CSI-RS within every 2 PRBs. For example, this indication information may specify that the CSI-RS is mapped in odd (or even) PRBs.

In some implementations, the configuration information A may include configuration information related to the code domain of the CSI-RS resource. For ease of description, the configuration information related to the code domain of the CSI-RS resource is hereinafter referred to as configuration information D.

In some implementations, the configuration information D may include an indication of the number of CSI-RS resources that can be multiplexed through code division multiplexing (CDM). That is, multiple CSI-RS resources may be multiplexed through CDM, and this parameter may indicate the number of CSI-RS resources that can be multiplexed through CDM for the same time-frequency resource.

In some implementations, the configuration information D may include the type of code division multiplexing. This parameter may be used to determine the pattern of the CSI-RS, i.e., the pattern of the CSI-RS within a PRB. That is, multiple CSI-RS resources may be multiplexed within a PRB through CDM or frequency division multiplexing (FDM), and this parameter may be used to determine the multiplexing method and/or pattern of the multiple CSI-RS resources.

In some embodiments, the configuration information D may include an indication of parameters for generating the CSI-RS sequence. For example, this parameter may be used to determine an initial sequence for generating the CSI-RS sequence.

For examplethe CSI-RS sequence can be generated by:

$$r(m) = \frac{1}{\sqrt{2}}(1 - 2 \cdot c(2m)) + j\frac{1}{\sqrt{2}}(1 - 2 \cdot c(2m + 1))$$

Where c(n) is a pseudo-random sequence and can be determined by:

$$c(n) = \left(x_1(n + N_c) + x_2(n + N_c)\right) mod\, 2$$

$$x_1(n + 31) = \left(x_1(n + 3) + x_1(n)\right) mod\, 2$$

$$x_2(n + 31) = \left(x_2(n + 3) + x_2(n + 2) + x_2(n + 1) + x_2(n)\right) mod\, 2$$

Where $N_C$ = 1600, the initialization parameter for the 1st m sequence $x_1(n)$ is $x_1(0) = 1, x_1(n) = 0$, n = 1,2,...,30. The 2nd m sequence $x_2(n)$ can be expressed as $c_{\text{init}} = \sum_{i=0}^{30} x_2(i) \cdot 2^i$, where $c_{\text{init}} = \left(2^{10}\left(N_{\text{symb}}^{\text{slot}} n_{\text{s,f}}^{\mu} + l + 1\right)(2n_{\text{ID}} + 1) + n_{\text{ID}}\right) mod\, 2^{31}$. $n_{\text{s,f}}^{\mu}$ represents a slot number within a wireless frame, *l* represents an OFDM symbol within a slot, the value of $n_{\text{ID}}$ is determined by at least one of: higher layer configuration parameters, CSI-RS resource set identifier, CSI-RS resource identifier, cyclic redundancy check (CRC) sequence generated based on SCI, source identification information, and destination identification information. The higher layer configuration parameters may refer to a scrambling identifier (ScramblingID). The source identification information may be source identification information carried in the SCI. The destination identification information may be destination identification information carried in the SCI. For example, the destination identification information may be the identifier of a second terminal device, the group identifier of a terminal device group to which the second terminal device belongs, or the member identifier of the second terminal device.

It should be understood that the various pieces of information or parameters described above may be included in the same configuration information or in different configuration information.

## Embodiment 3: CSI-RS Resource Determination

When adopting a beam-based transmission method, in many scenarios, the first terminal device and/or the second terminal device need to determine the CSI-RS resources.

For example, the transmission beam of the first terminal device is typically implemented as follows. First, the first terminal device sends CSI-RS using different transmission beams in turn. Accordingly, the second terminal device can use the same reception beam to receive multiple CSI-RS sent by the first terminal device, and measure the received CSI-RS. Then, the second terminal device can select the optimal CSI-RS and feed back the CSI-RS resource information (such as the CSI-RS resource index) corresponding to the optimal CSI-RS to the first terminal device. That is to say, the transmission beam corresponding to this CSI-RS resource information is the optimal transmission beam for the second terminal device.

Optionally, the second terminal device can also report or feed back the CSI-RS resource information and corresponding measurement results of N CSI-RS (N can be greater than or equal to 1) to the first terminal device. Correspondingly, the first terminal device can select one CSI-RS from these N CSI-RS resources and use the transmission beam corresponding to the selected CSI-RS for sidelink transmission.

From the process described above, it can be seen that the first terminal device needs to send multiple CSI-RS during determination of the transmission beam. Therefore, during the determination of the transmission beam, the first terminal device and/or the second terminal device need to determine the CSI-RS resource(s).

For example, in the process of determining the optimal reception beam of the second terminal device, the following method is usually adopted. First, the first terminal device can send multiple CSI-RS using the same transmission beam. Optionally, the first terminal device can send CSI-RS using the optimal transmission beam for the second terminal device. The second terminal device can use different reception beams in turn to receive the CSI-RS sent by the first terminal device and measure the received CSI-RS. Then, the second terminal device can select the optimal reception beam from the reception beams based on the measurement results of the received CSI-RS. Then, when the first terminal device uses the optimal transmission beam for sidelink transmission, the second terminal device can use the optimal reception beam for sidelink reception. Optionally, the first terminal device can adopt the above process for different transmission beams respectively, so as to determine the optimal reception beam corresponding to each transmission beam respectively. Therefore, when the first terminal device performs sidelink transmission, the first terminal device can indicate the transmission beam used for sidelink transmission to the second terminal device. Correspondingly, the second terminal device can determine the optimal reception beam corresponding to the current transmission beam of the first terminal device and use this optimal reception beam for sidelink reception.

From the process described above, it can be seen that the first terminal device needs to send multiple CSI-RS during the determination of the reception beam. Therefore, during the determination of the reception beam, the first terminal device and/or the second terminal device need to determine the CSI-RS resources.

For example, in the process of beam failure detection, it is necessary to configure CSI-RS resources for the second terminal device. The second terminal device can perform beam failure detection based on these CSI-RS resources. Therefore, during the process of beam failure detection, the first terminal device and/or the second terminal device need to determine the CSI-RS resources.

In conclusion, whether it is the process of beam selection or the process of beam failure detection, the determination of CSI-RS resources is required.

Referring to FIG. 20, the method for sidelink transmission provided in the embodiments of the disclosure is introduced in detail below. The method for sidelink transmission mainly provides a way to determine CSI-RS resources.

Referring to FIG. 20, at step S2010, a first terminal device or a second terminal device determines a first CSI-RS resource. The first CSI-RS resource may include one or more CSI-RS resources.

In some implementations, the first CSI-RS resource may be a non-periodic sidelink CSI-RS resource.

In some implementations, the first CSI-RS resource may be a periodic sidelink CSI-RS resource.

In some implementations, the first CSI-RS resource may be a semi-persistent sidelink CSI-RS resource.

The semi-persistent sidelink CSI-RS resource may also be referred to as semi-static sidelink CSI-RS. After the semi-persistent sidelink CSI-RS resource is activated, the CSI-RS resource is a periodic sidelink CSI-RS resource. In the following, the descriptions related to the period of the CSI-RS can apply to both periodic sidelink CSI-RS resources and semi-persistent sidelink CSI-RS resources. In other words, the term "periodic" in the subsequent text can be replaced with "semi-persistent" or "semi-static." For example, the periodic CSI-RS transmission opportunity mentioned in Embodiment 3.1 in the subsequent text can be replaced with semi-persistent or semi-static CSI-RS transmission opportunity; the periodic CSI-RS transmission opportunity set can be replaced with semi-persistent or semi-static CSI-RS transmission opportunity set.

In some implementations, the first CSI-RS resource may be determined based on configuration information. The configuration information may be determined based on one or more of the following: protocol predefined information, preconfiguration information, network device configuration information, resource pool configuration information, sidelink BWP configuration information, PC5-RRC signaling, indication information sent by the first terminal device, and indication information sent by the second terminal device. For example, the configuration information may be any type of configuration information mentioned in Embodiment 2, which is detailed in Embodiment 2 and is not described in detail here.

In some embodiments, the first CSI-RS resource may be activated based on indication information (or activation information) sent by the first terminal device. The indication information may be carried by SCI or MAC CE.

In some embodiments, one CSI-RS resource in the first CSI-RS resource occupies a second-to-last symbol and third-to-last symbol in time-domain symbols available for sidelink transmission in a slot. Further, in some implementations, data transmitted on the second-to-last symbol and the third-to-last symbol are the same. For example, the first CSI-RS resource may adopt the slot structure containing CSI-RS mentioned in Embodiment 1, which is detailed in the descriptions related to FIG. 14 and FIG. 15, and is not repeated here.

In some implementations, the first CSI-RS resource may be used to determine a transmission beam. For example, in the process of determining the transmission beam, the first terminal device may periodically send CSI-RS based on the first CSI-RS resource, allowing the second terminal device to measure the periodically sent CSI-RS and select a transmission beam.

In some implementations, the first CSI-RS resource may be used to determine an initial transmission beam. That is, the first CSI-RS resource may be used for the first determination of the transmission beam.

In some implementations, the first CSI-RS resource may be used to determine a new transmission beam after a beam failure occurs.

In some implementations, the CSI-RS resources in the first CSI-RS resource used for determining the transmission beam do not correspond to the same transmission beam. In other words, the CSI-RS resources in the first CSI-RS resource used for determining the transmission beam correspond to different transmission beams.

In some implementations, the first CSI-RS resource may be used to determine a reception beam. For example, in the process of determining the reception beam, the first terminal device may periodically send CSI-RS based on the first CSI-RS resource, allowing the second terminal device to measure the periodically sent CSI-RS and select a reception beam.

In some implementations, the CSI-RS resources in the first CSI-RS resource used for determining the reception beam correspond to the same transmission beam.

In some implementations, the first CSI-RS resource may be used for beam failure detection. For example, in the process of beam failure detection, the first terminal device may periodically send CSI-RS based on the first CSI-RS resource, allowing the second terminal device to measure the periodically sent CSI-RS to determine whether a beam failure has occurred.

In some implementations, the CSI-RS resources in the first CSI-RS resource used for beam failure detection correspond to the same transmission beam. Alternatively, the CSI-RS resources in the first CSI-RS resource used for beam failure detection may correspond to different transmission beams.

Furthermore, in some implementations, the CSI-RS resources in the first CSI-RS resource used for beam failure detection correspond to the same first transmission beam, and the first transmission beam is the transmission beam used for sidelink data transmission beam by the first terminal device.

In some implementations, the first CSI-RS resource may be associated with one or more of the following: periodic CSI-RS transmission opportunities (e.g., transmission slots); and periodic CSI-RS transmission opportunity sets (e.g., transmission slot sets). For example, the first CSI-RS resource may be associated with both periodic CSI-RS transmission opportunities and periodic CSI-RS transmission opportunity sets. Detailed descriptions are provided in Embodiment 3.1 in the subsequent text. Alternatively, the first CSI-RS resource may be associated only with periodic CSI-RS transmission opportunities. Detailed descriptions are provided in Embodiment 3.2 in the subsequent text.

**Embodiment 3.1: The First CSI-RS Resource Is Associated With Both Periodic CSI-RS Transmission Opportunities And Periodic CSI-RS Transmission Opportunity Sets**

If the first CSI-RS resource is associated with both periodic CSI-RS transmission opportunities and periodic CSI-RS transmission opportunity sets, the period parameter corresponding to the first CSI-RS may include: parameter P1, parameter P2, and parameter N. Parameter P1 can be used to indicate the period value corresponding to the periodic CSI-RS transmission opportunity set. Parameter P2 can be used to indicate the period value corresponding to the periodic CSI-RS transmission opportunity. Parameter N can be used to indicate the number of CSI-RS transmission opportunities included in one CSI-RS transmission opportunity set among periodic CSI-RS transmission opportunity sets.

FIG. 21 illustrates an example where the first CSI-RS resource is associated with both the CSI-RS transmission opportunity and the CSI-RS transmission opportunity set. Each bar in FIG. 21 represents one CSI-RS transmission opportunity. As can be seen from FIG. 21, the period of the CSI-RS transmission opportunity set associated with the first CSI-RS resource is P1. Each CSI-RS transmission opportunity set includes 4 CSI-RS transmission opportunities (i.e., the value of parameter N is 4). These 4 CSI-RS transmission opportunities are periodic, and the period value of each of these 4 CSI-RS transmission opportunities is P2.

In some implementations, the parameter P1 can be determined based on one or more of the following: protocol predefined information, preconfiguration information, network device configuration information, resource pool configuration information, PC5-RRC signaling, indication information sent by the first terminal device, and indication information sent by the second terminal device.

In some implementations, the period value indicated by parameter P1 can be represented by the number of slots. For example, it can be the number of slots in a resource pool.

In some implementations, parameter P2 can be determined based on one or more of the following: protocol predefined information, preconfiguration information, network device configuration information, resource pool configuration information, PC5-RRC signaling, indication information sent by the first terminal device, and indication information sent by the second terminal device.

In some implementations, the period value indicated by parameter P2 can be represented by the number of slots. For example, it can be the number of slots in a resource pool.

In some implementations, parameter N can be determined based on one or more of the following: protocol predefined information, preconfiguration information, network device configuration information, resource pool configuration information, PC5-RRC signaling, indication information sent by the first terminal device, indication information sent by the second terminal device, the number of transmission beams supported by the first terminal device, the number of reception beams supported by the second terminal device, and the number of CSI-RS resources used for beam failure detection.

In some embodiments, if the first CSI-RS resource is used for determining the transmission beam, the parameter N may be determined based on the number of transmission beams supported by the first terminal device and/or the number of reception beams supported by the second terminal device. For example, if the first CSI-RS resource is used for determining the transmission beam, since the first terminal device needs to send CSI-RS using different transmission beams, the first CSI-RS resource may be determined based on the number of transmission beams supported by the first terminal device. Alternatively, if the first CSI-RS resource is used for determining the optimal beam pair between transmission beams and reception beams, since the first terminal device needs to send CSI-RS using different transmission beams and the second terminal device also needs to receive CSI-RS using different reception beams, the first CSI-RS resource may be determined based on both the number of transmission beams supported by the first terminal device and the number of reception beams supported by the second terminal device.

For example, the parameter N may be determined based on the sum of the number of transmission beams supported by the first terminal device and the number of reception beams supported by the second terminal device. For instance, the parameter N may be equal to the sum of the number of transmission beams supported by the first terminal device and the number of reception beams supported by the second terminal device.

Alternatively, the parameter N may be determined based on the product of the number of transmission beams supported by the first terminal device and the number of reception beams supported by the second terminal device. For instance, the parameter N may be less than or equal to the product of the number of transmission beams supported by the first terminal device and the number of reception beams supported by the second terminal device.

In some embodiments, if the first CSI-RS resource is used for determining the reception beam, the parameter N may be determined based on the number of transmission beams supported by the first terminal device and/or the number of reception beams supported by the second terminal device. For example, if the first CSI-RS resource is used for determining the reception beam, since the second terminal device needs to use different reception beams to receive the CSI-RS sent by the first terminal device, the first CSI-RS resource may be determined based on the number of reception beams supported by the second terminal device. Alternatively, if the first CSI-RS resource is used for determining the optimal beam pair between transmission beams and reception beams, since the first terminal device needs to send CSI-RS using different transmission beams and the second terminal device also needs to receive CSI-RS using different reception beams, the first CSI-RS resource may be determined based on both the number of transmission beams supported by the first terminal device and the number of reception beams supported by the second terminal device.

As a specific example, the first terminal device supports 8 transmission beams, and the second terminal device supports 4 reception beams. When the first CSI-RS resource is used for determining the transmission beam, the first terminal device needs to send CSI-RS using different transmission beams respectively. Therefore, the parameter N can be determined based on the number of transmission beams supported by the first terminal device. For example, the value of parameter N can be set to 8.

As another specific example, the first terminal device supports 8 transmission beams, and the second terminal device supports 4 reception beams. When the first CSI-RS resource is used for determining the reception beam, the first terminal device sends CSI-RS using the same transmission beam, while the second terminal device receives CSI-RS using different reception beams. Therefore, the parameter N can be determined based on the number of reception beams supported by the second terminal device. For example, the value of parameter N can be set to 4.

As yet another specific example, the first terminal device supports 8 transmission beams, and the second terminal device supports 4 reception beams. When the first CSI-RS resource is used for determining the transmission beam, since there are 8 transmission beams and 4 reception beams, a total of 32 transmit-reception beam pairs are supported. To obtain the optimal transmit-reception beam pair, the first terminal device needs to send CSI-RS for 32 times, meaning that one CSI-RS transmission opportunity set can include 32 CSI-RS resources (i.e., the value of parameter N can be set to 32). For example, the first terminal device sends CSI-RS using the 8 transmission beams respectively, and the second terminal device receives these 8 CSI-RS using the 1st reception beam. The first terminal device then sends CSI-RS again using the 8 transmission beams, and the second terminal device receives these 8 CSI-RS using the 2nd reception beam. The first terminal device then sends CSI-RS again using the 8 transmission beams, and the second terminal device receives these 8 CSI-RS using the 3rd reception beam. The first terminal device then sends CSI-RS again using the 8 transmission beams, and the second terminal device receives these 8 CSI-RS using the 4th reception beam. Afterward, the second terminal device can select the optimal transmission beam based on the measurement results of the 32 CSI-RS and send the CSI-RS resource information corresponding to the optimal transmission beam to the first terminal device.

In some implementations, if the first CSI-RS resource is used for beam failure detection, the parameter N can be determined based on the number of CSI-RS resources used for beam failure detection. For example, if the number of CSI-RS resources used for beam failure detection is A, the value of parameter N can be determined based on A. Of course, in some other implementations, the value of parameter A can also be determined based on the value of parameter N.

In some implementations, N CSI-RS transmission slots in one CSI-RS resource set can include N1+N2 CSI-RS transmission opportunities (i.e., the parameter N can include parameters N1 and N2). Among these N1+N2 CSI-RS transmission opportunities, N1 CSI-RS transmission opportunities can be used for determining the transmission beam, and N2 CSI-RS transmission opportunities can be used for determining the reception beam. The first terminal device can send CSI-RS using different transmission beams in the N1 CSI-RS transmission opportunities, while the second terminal device can measure using the same reception beam in these N1 CSI-RS transmission opportunities, to select preferred transmission beam and report the CSI-RS resource corresponding to the preferred transmission beam to the first terminal device. The first terminal device can send CSI-RS using the same transmission beam in the N2 CSI-RS transmission opportunities, while the second terminal device can receive and measure using different reception beams in these N2 CSI-RS transmission opportunities, and then select the preferred reception beam based on the measurement results.

As illustrated in FIG. 22, N=8, N1=4, and N2=4. That is, each CSI-RS transmission slot set includes 4 CSI-RS transmission opportunities for determining the transmission beam and 4 CSI-RS transmission opportunities for determining the reception beam. FIG. 22 exemplarily shows that the first 4 CSI-RS slots in each set are used for determining the transmission beam, and the last 4 CSI-RS slots are used for determining the reception beam. In other embodiments, the first N2 CSI-RS slots can be used for determining the reception beam, and the last N1 CSI-RS slots can be used for determining the transmission beam.

In another implementation, the first set of CSI-RS resources and/or the second set of CSI-RS resources can be determined based on configuration information. The first set of CSI-RS transmission resources can be used for determining or selecting the transmission beam, and the second set of CSI-RS transmission resources can be used for determining or selecting the reception beam.

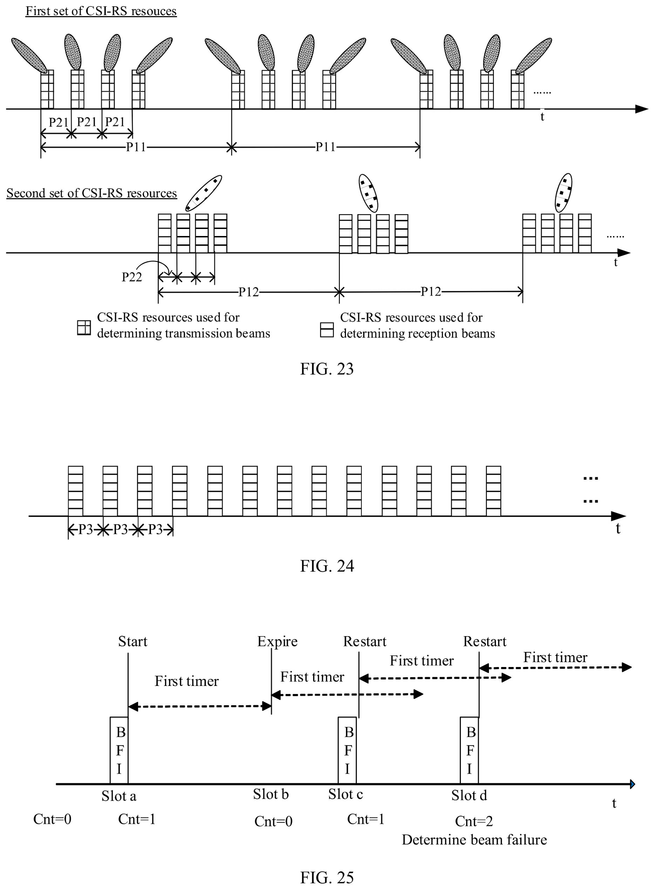

As illustrated in FIG. 23, the first set of CSI-RS resources and the second set of CSI-RS resources can be determined based on configuration information. The period parameter P1 mentioned earlier can include parameters P11 and P12; the period parameter P2 can include parameters P21 and P22. For the first set of CSI-RS resources, each CSI-RS transmission slot set includes 4 CSI-RS transmission slots. The first terminal device can send CSI-RS using different beams, and the second terminal device can use the same reception beam to receive the CSI-RS sent by the first terminal device and then measure the CSI-RS. Then, the second terminal device can select the preferred transmission beam based on the measurement results and send the corresponding CSI-RS resource information of the preferred transmission beam to the first terminal device. Additionally, for the second set of CSI-RS resources, each CSI-RS transmission slot set includes 4 CSI-RS transmission slots. In each CSI-RS transmission resource set, the first terminal device can send CSI-RS using the same beam, and the second terminal device can use different reception beams to receive the CSI-RS sent by the first terminal device and then measure the CSI-RS, and select the preferred reception beam based on the measurement results.

### Embodiment 3.2: The First CSI-RS Resource Is Associated With Periodic CSI-RS Transmission Opportunities

If the first CSI-RS resource is only associated with periodic CSI-RS transmission opportunities, then the period parameter corresponding to the first CSI-RS resource may include parameter P3. This parameter P3 can be used to indicate the period value corresponding to the periodic CSI-RS transmission opportunities.

In some implementations, the parameter P3 can be determined based on one or more of the following: protocol predefined information, preconfiguration information, network device configuration information, resource pool configuration information, PC5-RRC signaling, indication information sent by the first terminal device, and indication information sent by the second terminal device.

In some implementations, the period value indicated by parameter P3 can be represented by the number of slots, such as the number of slots in a resource pool.

FIG. 24 provides an example where the first CSI-RS resource is only associated with CSI-RS transmission opportunities. Each bar in FIG. 24 represents a CSI-RS transmission opportunity. It can be seen from FIG. 24 that the period of the CSI-RS transmission opportunity set associated with the first CSI-RS resource is P3.

Similar to Embodiment 3.1, if the first CSI-RS resource is used for determining both transmission beam and reception beam, in one implementation, a set of CSI-RS transmission resources can be determined based on configuration information. In this set of CSI-RS transmission resources, every N CSI-RS transmission slots form a group, among which N1 CSI-RS slots are used for determining the transmission beam, N2 CSI-RS slots are used for determining the reception beam, and N=N1+N2.

In another embodiment, two sets of CSI-RS transmission resources can be determined based on configuration information. The first set of CSI-RS resources is used for determining the transmission beam, and the second set of CSI-RS resources is used for determining the reception beam. The specific implementation is similar to the method illustrated in FIG. 23 of Embodiment 3.1 and is not described in detail here.

The above text, combined with Embodiments 3.1 and 3.2, provides a detailed description of the periodic structure of the first CSI-RS resource. The following text, combined with Embodiment 3.3, provides a detailed description of the determination method of the first CSI-RS resource. It should be understood that Embodiment 3.3 can be combined with Embodiment 3.1 or Embodiment 3.2.

### Embodiment 3.3: Determination of Time-Domain Resources of The First CSI-RS Resource

The first CSI-RS resource can be determined based on one or more of the first parameter to the fourth parameter described below. The first parameter can be used to determine the time-domain position of the 1st CSI-RS resource within the first CSI-RS resource. The second parameter can be used to indicate the period value corresponding to the periodic CSI-RS transmission opportunity. The third parameter can be used to indicate the period value corresponding to the periodic CSI-RS transmission opportunity set. The fourth parameter can be used to indicate the number of CSI-RS transmission opportunities included in a one CSI-RS transmission opportunity set among periodic CSI-RS transmission opportunity sets.

The second to fourth parameters are period parameters of the first CSI-RS resource. The period parameters of the first CSI-RS resource include which parameters are related to the periodic structure adopted by the first CSI-RS resource. For example, if the first CSI-RS resource adopts the periodic structure illustrated in Embodiment 3.1, the period parameters of the first CSI-RS resource include the second parameter, the third parameter, and the fourth parameter. The second parameter may correspond to parameter P2 in Embodiment 3.1, the third parameter may correspond to parameter P1 in Embodiment 3.1, and the fourth parameter may correspond to parameter N in Embodiment 3.1. If the first CSI-RS resource adopts the periodic structure illustrated in Embodiment 3.2, the period parameters of the first CSI-RS resource may include the second parameter, which may correspond to parameter P3 in Embodiment 3.2.

In some implementations, the first parameter may include one or more of the following: the time-domain position of the first time-domain unit; and the time interval T2 (or time offset).

In some implementations, the first time-domain unit may be determined based on the time-domain unit where the target information is located.

In some implementations, the target information may include the activation information (or activation signaling) for activating the CSI-RS resource. That is, the first time-domain unit may be determined based on the time-domain unit where the activation information is located. For example, the time-domain unit where the activation information is located may be the first time-domain unit. In one implementation, the first terminal device may obtain the configuration information of the CSI-RS resource or resource set. Then, the first terminal device may send the activation information to the second terminal device, which may be used to activate the CSI-RS resource or resource set. Optionally, the activation information may be carried in SCI or MAC CE; alternatively, the activation information may be carried simultaneously through SCI and MAC CE.

For example, when the first terminal device sends the activation information of the CSI-RS resource in slot n, it also sends indication information, which is for indicating the time interval T2. In this example, the 1st CSI-RS resource may be the 1st available CSI-RS resource located after slot n+T2; alternatively, the 1st CSI-RS resource may be the 1st available CSI-RS resource not earlier than slot n+T2.

In some implementations, the target information may include the indication information (hereinafter referred to as indication information 1) for indicating CSI-RS transmission. That is, the first time-domain unit may be determined based on the time-domain unit where the indication information 1 is located. For example, the time-domain unit where the indication information 1 is located may be the first time-domain unit. The indication information 1 may be carried in SCI, MAC CE, or PC5-RRC. Optionally, the indication information 1 may be carried in SCI or MAC CE; alternatively, the indication information 1 may be carried simultaneously through SCI and MAC CE.

Optionally, the indication information 1 may include one or more of the following information: CSI-RS resource set index information, CSI-RS resource index information, indication information for indicating whether repetition is performed, and a first information field. When the value of the first information field is a first value (e.g., the first value is 1), the first information field may be used to indicate CSI-RS transmission.

For example, the indication information 1 may include indication information for indicating whether repetition is performed. As an example, two CSI-RS resource sets may be configured for the first terminal device, one of which has the value of the "repetition" parameter set to "off", and the other has the "repetition" parameter set to "on". The first terminal device includes the information field of the "repetition" parameter in the SCI. When the value of the "repetition" parameter is a first value (e.g., corresponding to "off"), it indicates that the first terminal device will send the CSI-RS resources in the 1st CSI-RS resource set; when the value of the "repetition" parameter is a second value (e.g., corresponding to "on"), it indicates that the first terminal device will send the CSI-RS resources in the 2nd CSI-RS resource set.

In some implementations, the target information may include the indication information (hereinafter referred to as indication information 2) for indicating the second terminal device to report CSI-RS resource information. That is, the first time-domain unit may be determined based on the time-domain unit where the indication information 2 is located. For example, the time-domain unit where the indication information 2 is located may be the first time-domain unit. The indication information 2 may be carried in SCI, MAC CE, or PC5-RRC. Optionally, the indication information 2 may be carried in SCI or MAC CE; alternatively, the indication information 2 may be carried simultaneously through SCI and MAC CE.

In some implementations, the target information may include indication information (hereinafter referred to as indication information 3) for triggering or indicating the second terminal device to report beam failure information. That is, the first time-domain unit may be determined based on the time-domain unit where the indication information 3 is located. For example, the time-domain unit where the indication information 3 is located may be the first time-domain unit. Optionally, the indication information 3 may be carried in SCI or MAC CE; alternatively, the indication information 3 may be carried simultaneously through SCI and MAC CE.

In some implementations, the target information may include indication information 4 for indicating to report RSRP or SINR. That is, the first time-domain unit may be determined based on the time-domain unit where the indication information 4 is located. For example, the time-domain unit where the indication information 4 is located may be the first time-domain unit. Optionally, the indication information 4 may be carried in SCI or MAC CE; alternatively, the indication information 4 may be carried simultaneously through SCI and MAC CE.

In some implementations, the target information may include indication information 5 for indicating the report quantity. That is, the first time-domain unit may be determined based on the time-domain unit where the indication information 5 is located. For example, the time-domain unit where the indication information 5 is located may be the first time-domain unit. The report quantity may be one of the following: CRI, RSRP, SINR, CRI and RSRP, CRI and SINR, slot indication information, slot indication information and RSRP, slot indication information and SINR, or not reporting (none). For example, if the SCI sent by the first terminal device includes the above report quantity, it may indicate that the first terminal device is going to send the first CSI-RS resource; accordingly, the second terminal device may determine the time-domain unit of the 1st CSI-RS resource in the first CSI-RS resource based on the time-domain unit where the SCI is located. Optionally, the indication information 5 may be carried in SCI or MAC CE; alternatively, the indication information 5 may be carried simultaneously through SCI and MAC CE.

In some implementations, the priority of the target information may be determined based on predefined protocol information, preconfiguration information, or network device configuration information.

In some implementations, the priority of the target information may be the highest priority among preset priorities. For example, the value of the priority of the target information may be 1.

In some implementations, the priority of the target information may be the lowest priority among the pre-set priorities. For example, the value of the priority of the target information may be 8.

In some implementations, the first time-domain unit may be determined based on a reference time-domain unit indicated by the first terminal device. For example, the first terminal device may send an indication information that can be used to determine the first reference time-domain unit. The first time-domain unit may be determined based on this reference time-domain unit. For example, the first time-domain unit may be the reference time-domain unit itself.

In some implementations, the time interval T2 may indicate the minimum time interval between the first time-domain unit and the 1st CSI-RS resource. The time interval T2 may be determined based on one or more of the following: pre-defined protocol information, preconfiguration information, network device configuration information, resource pool configuration information, PC5-RRC signaling, indication information sent by the first terminal device, and an indication information sent by the second terminal device.

For example, the resource pool configuration information may include CSI-RS resource configuration information, which may include minimum time interval indication information. This minimum time interval may represent the minimum time interval between the 1st CSI-RS resource and its associated SCI, PSCCH, MAC CE, or indication information.

Alternatively, the first terminal device may send an indication information that indicates the time interval T2. The time interval T2 may be the time interval or time offset from the time-domain unit where the indication information is located, or it may be the time interval or time offset from the first time-domain unit. Optionally, the indication information may be carried in SCI, MAC CE, or PC5-RRC. For example, the indication information in the SCI sent by the first terminal device that indicates the time interval T2 may include an index value. Based on this index value and a first correspondence relationship, the size of the time interval T2 may be determined. The first correspondence relationship may indicate the relationship between the index value and the size of the time interval. The first correspondence relationship may be included in the resource pool configuration information, which may be determined based on preconfiguration information or network device configuration information.

In some implementations, the 1st CSI-RS resource may refer to the 1st available CSI-RS resource after the first time-domain unit with a time interval of T2.

In some implementations, the time-domain positions of the other CSI-RS resources in the first CSI-RS resource, except for the 1st CSI-RS resource, may be determined based on a fifth parameter. The fifth parameter may be determined based on the period parameter of the first CSI-RS resource. The period parameter of the first CSI-RS resource may include one or more of the second parameter, the third parameter, and the fourth parameter. For example, in Embodiment 3.1, the period parameter of the first CSI-RS resource may include the second parameter (corresponding to parameter P2 in Embodiment 3.1), the third parameter (corresponding to parameter P1 in Embodiment 3.1), and the fourth parameter (corresponding to parameter N in Embodiment 3.1). In Embodiment 3.2, the period parameter of the first CSI-RS resource may include the second parameter (corresponding to parameter P3 in Embodiment 3.2).

In some implementations, the first CSI-RS resource may include multiple CSI-RS resources located at different time-domain positions. The frequency-domain resources, code-domain resources, and CSI-RS sequences corresponding to these multiple CSI-RS resources may all be the same. Since the multiple CSI-RS are transmitted by the first terminal device at different time-domain positions, they can be distinguished by their time-domain positions. Therefore, the multiple CSI-RS resources transmitted at different time-domain positions may have the same frequency-domain resources, code-domain resources, and the same CSI-RS sequences.

In some implementations, the first CSI-RS resource may include multiple CSI-RS resources located at different time-domain positions, and at least one of the frequency-domain resources, code-domain resources, and CSI-RS sequences corresponding to these multiple CSI-RS resources may be different. The frequency-domain resources corresponding to the multiple CSI-RS resources being different may refer to one or more of the following corresponding to the multiple CSI-RS resources being different: subchannels, PRBs, and RE positions within the PRBs.

**Embodiment 4: Beam Failure Detection**

In an NR (New Radio) system, when a network device and a terminal device employ beam-based transmission, the terminal device needs to determine whether a beam failure has occurred. To perform beam failure detection, the network device configures periodic SSB or CSI-RS resources for the terminal device. The terminal device can measure these periodic SSB or CSI-RS resources and determine whether a beam failure has occurred based on the measurement results.

However, in a sidelink system, the transmission resources of the sidelink SSB (S-SSB) are shared by multiple terminal devices. That is, multiple terminal devices can simultaneously transmit S-SSB on the same transmission resource. Therefore, in a sidelink system, S-SSB is not suitable for beam failure detection.

Thus, in a sidelink system, beam failure detection can be performed based on CSI-RS (or CSI-RS resources). The transmission mechanism of this CSI-RS can, for example, adopt the transmission mechanism described in Embodiment 1. The configuration information of this CSI-RS can, for example, include part or all of the configuration information described in Embodiment 2.

For beam failure detection, semi-persistent or periodic CSI-RS resources need to be configured. The configuration method for these semi-persistent or periodic CSI-RS resources can be referred to Embodiment 3, especially the content related to beam failure detection in Embodiment 3.

The second terminal device can perform beam failure detection based on the CSI-RS resources. If the second terminal device determines that beam failure detection criteria are met, the second terminal device can report beam failure indication information to the first terminal device. Optionally, if the second terminal device selects a new beam, it can report the information of the newly selected transmission beam (i.e., the CSI-RS resource information corresponding to the transmission beam) to the first terminal device. Optionally, the second terminal device can report the beam failure information and the information of the newly selected transmission beam simultaneously or separately. Detailed descriptions of the reporting of beam failure indication information can be referred to Embodiment 6 later in the text. Detailed descriptions of the reporting of beam information (i.e., CSI-RS resource information) can be referred to Embodiment 7 later in the text.

To enable the second terminal device to select a new transmission beam, in one implementation, the second terminal device can obtain the configuration information of periodic or semi-persistent CSI-RS resources and use these CSI-RS resources to select a transmission beam.

Optionally, for the CSI-RS resources used for beam failure detection, the first terminal device can transmit using the same transmission beam, or the second terminal device expects the first terminal device to transmit using the same transmission beam. In one implementation, this same transmission beam is the beam used by the first terminal device for sidelink transmission.

Optionally, for the CSI-RS resources used for new beam selection, the first terminal device does not transmit using the same transmission beam, or transmits using different transmission beams, or the second terminal device does not expect the first terminal device to transmit using the same transmission beam, or the second terminal device expects the first terminal device to transmit using different transmission beams.

For the selection of transmission beams, reference can be made to Embodiment 3, especially the content related to the selection of transmission beams in Embodiment 3, which will not be described in detail here.

The following text provides detailed illustrative examples of specific methods for beam failure detection.

When performing beam failure detection, the second terminal device can determine the CSI-RS resource based on the configuration information. Subsequently, the second terminal device can measure the CSI-RS resource and determine whether a beam failure has occurred based on the measurement result.

If a beam failure occurs, the second terminal device can send beam failure indication information to the first terminal device to indicate that a beam failure has occurred. Alternatively, regardless of whether a beam failure has occurred, the second terminal device can send the beam failure indication information to the first terminal device to indicate whether a beam failure has occurred.

In some implementations, the beam failure indication information can be determined based on measurements of J CSI-RS resources, where J is a positive integer greater than or equal to 1.

In some implementations, the J CSI-RS resources can be periodic or semi-persistent CSI-RS resources. For example, the J CSI-RS resources can be J consecutive periodic CSI-RS resources.

In some implementations, the priority of the J CSI-RS resources can be determined based on predefined protocol information, preconfiguration information, or network configuration information.

In some implementations, the priority of the J CSI-RS resources can be the highest or lowest priority among predefined priorities. For example, the priority value of the J CSI-RS resources can be 1 (highest priority), or the priority value can be 8 (lowest priority).

In some implementations, the first terminal device can transmit the J CSI-RS resources using the same transmission beam.

In some implementations, the J CSI-RS resources can be part or all of the first CSI-RS resources described in Embodiment 3. Therefore, the content related to the first CSI-RS resources in Embodiment 3, if not in conflict, can be applicable to this example.

In some implementations, the beam failure indication information, which is determined based on measurements of the J CSI-RS resources, can be based on one or more of the following: parameter q; and the first indication information received by the higher layer of the second terminal device, where the first indication information is determined based on the measurement results of A CSI-RS resources (e.g., including sidelink RSRP and/or sidelink SINR). The A CSI-RS resources belong to the J CSI-RS resources, and A is less than or equal to J. For example, $J = k \times A$, where k is a positive integer greater than or equal to 1.

In some implementations, the higher layer of the second terminal device refers to the MAC layer of the second terminal device. The first indication information can be reported from the lower layer (e.g., physical layer) of the second terminal device to the MAC layer.

In some implementations, the first indication information includes a beam failure instance (BFI).

This application does not specifically limit the reporting conditions for the first indication information.

In some implementations, the A CSI-RS resources can correspond to A measurement results. If B measurement results out of the A measurement results have values less than or equal to a first threshold, the first indication information can be reported to the higher layer of the second terminal device. Here, B is a positive integer less than or equal to A. For example, if A = 1, then B = 1. Alternatively, B = A, meaning that the first indication information is reported to the higher layer only when all A measurement results are below the first threshold.

The value of J mentioned above can be determined based on one or more of the following: predefined protocol information, preconfiguration information, network device configuration information, resource pool configuration information, PC5-RRC signaling, indication information sent by the first terminal device, and indication information sent by the second terminal device.

The value of A mentioned above can be determined based on one or more of the following: predefined protocol information, preconfiguration information, network device configuration information, resource pool configuration information, PC5-RRC signaling, indication information sent by the first terminal device, and indication information sent by the second terminal device.

The value of B mentioned above can be determined based on one or more of the following: predefined protocol information, preconfiguration information, network device configuration information, resource pool configuration information, PC5-RRC signaling, indication information sent by the first terminal device, and indication information sent by the second terminal device.

The threshold value of the first threshold mentioned above can be determined based on one or more of the following: predefined protocol information, preconfiguration information, network device configuration information, resource pool configuration information, PC5-RRC signaling, indication information sent by the first terminal device, and indication information sent by the second terminal device.

In some other implementations, if the first measurement value is less than or equal to the first threshold, the first indication information is reported to the higher layer of the second terminal device.

For example, the first measurement value can be determined based on the average of the A measurement results corresponding to the A CSI-RS resources.

Alternatively, the first measurement value can be determined based on the maximum value of the A measurement results corresponding to the A CSI-RS resources.

Alternatively, the first measurement value can be determined based on the minimum value of the A measurement results corresponding to the A CSI-RS resources.

In some implementations, if the higher layer of the second terminal device receives the first indication information, the second terminal device can determine to send beam failure indication information, or it can determine that the content indicated by the beam failure indication information sent is that a beam failure has occurred.

In some other implementations, whether to send a beam failure indication information or the content indicated by the beam failure indication information (beam failure occurred or no beam failure occurred) can be determined based on the first indication information and parameter q.

For example, parameter q can be used to determine whether the quantity and/or reporting interval of the first indication information meet the conditions for sending a beam failure indication information.

In some implementations, parameter q can include one or more of the following: a first timer and a first counter.

In some implementations, the duration of the first timer can be determined based on the period parameter corresponding to the A CSI-RS resources. For example, the duration of the first timer can be equal to $A \times P$, where P represents the period value indicated by the period parameter (e.g., parameter P2 or parameter P3 as described in Embodiment 3).

In some implementations, the first timer can satisfy one or more of the following: if the higher layer receives the first indication information, the first timer starts or restarts; and if the first timer expires, the first timer restarts.

In some implementations, the count value of the first counter can be determined based on the quantity of first indication information received by the higher layer of the second terminal device.

In some implementations, the first counter can satisfy one or more of the following: if the higher layer receives the first indication information, the count value of the first counter increments by 1; if the first counter is greater than or equal to a second threshold, a beam failure is determined or a beam failure recovery is triggered; if the first timer expires, the count value of the first counter is set to 0; and if the first counter equals a second threshold, the count value of the first counter is set to 0.

The threshold value of the second threshold can be determined based on one or more of the following: predefined protocol information, preconfiguration information, network device configuration information, resource pool configuration information, PC5-RRC signaling, indication information sent by the first terminal device, and indication information sent by the second terminal device.

For illustration, refer to FIG. 25. In FIG. 25, the first counter is denoted as Cnt, and the first indication information is BFI. The initial value of the first counter is 0, and the second threshold is 2. In slot a, the higher layer of the second terminal device receives the BFI indication reported from the lower layer, starts the first timer, and increments Cnt by 1. If the first timer expires or before the first timer expires (where the first timer expires in slot b), and the higher layer of the second terminal device does not receive the BFI indication reported from the lower layer, the first timer restarts and Cnt is reset to 0. Before the next expiration of the first timer, the higher layer of the second terminal device receives the BFI indication reported from the lower layer in slot c, increments Cnt by 1, and restarts the first timer. Then, before the next expiration of the first timer, the higher layer of the second terminal device receives the BFI indication reported from the lower layer in slot d, and increments Cnt by 1. At this point, Cnt = 2, reaching the second threshold. Therefore, the second terminal device can determine that a beam failure has occurred. Furthermore, the second terminal device can restart the first timer and reset Cnt to 0.

The following text introduces the conditions for the second terminal device to report beam failure indication information to the first terminal device.

In some implementations, the reporting of beam failure indication information includes one or more of the following: condition-based reporting, trigger-based reporting, and periodic reporting.

Condition-based reporting can include: if the second terminal device determines that a beam failure has occurred, the second terminal device reports the beam failure indication information to the first terminal device.

For example, the second terminal device can determine whether a beam failure has occurred based on the first counter and the second threshold mentioned earlier. If the value of the first counter is greater than or equal to the second threshold, a beam failure has occurred. In this case, the second terminal device can report the beam failure indication information to the first terminal device. If the value of the first counter is less than the second threshold, no beam failure is occurred. In this case, the second terminal device does not report the beam failure indication information to the first terminal device.

Alternatively, if the value of the first counter is greater than or equal to the second threshold, a beam failure has occurred. In this case, the second terminal device can report the beam failure indication information to the first terminal device, indicating that a beam failure has occurred. If the value of the first counter is less than the second threshold, no beam failure has occurred. In this case, the second terminal device can report the beam failure indication information to the first terminal device, indicating that no beam failure has occurred.

Trigger-based reporting can include: if the second terminal device receives an indication to trigger the reporting of beam failure indication information by the second terminal device, the second terminal device reports the beam failure indication information to the first terminal device. For example, the second terminal device can determine whether a beam failure has occurred based on the first counter and the second threshold mentioned earlier. If the value of the first counter is greater than or equal to the second threshold, and the second terminal device receives an indication to trigger the reporting of beam failure indication information, the second terminal device can report the beam failure indication information to the first terminal device, indicating that a beam failure has occurred. If the value of the first counter is less than the second threshold, and the second terminal device receives an indication to trigger the reporting of beam failure indication information, the second terminal device can report the beam failure indication information to the first terminal device, indicating that no beam failure has occurred. If the second terminal device does not receive an indication to trigger the reporting of beam failure indication information, the second terminal device does not report the beam failure indication information to the first terminal device. If the second terminal device receives an indication to trigger the reporting of beam failure indication information, and a beam failure has occurred since the last reporting of beam failure indication information by the second terminal device, the second terminal device reports the beam failure indication information, indicating that a beam failure has occurred. If the second terminal device receives an indication to trigger the reporting of beam failure indication information, and no beam failure has occurred since the last reporting of beam failure indication information by the second terminal device, the second terminal device reports the beam failure indication information, indicating that no beam failure has occurred, or the second terminal device does not report the beam failure indication information to the first terminal device.

Periodic reporting can include: if the reporting period for the beam failure indication information is reached, the second terminal device reports the beam failure indication information to the first terminal device. For example, if a beam failure has occurred since the last reporting of beam failure indication information by the second terminal device, the second terminal device reports the beam failure; if no beam failure has occurred since the last reporting of beam failure indication information by the second terminal device, the second terminal device reports that no beam failure has occurred or does not report the beam failure indication information.

In some implementations, the reporting period parameter for the beam failure indication information can be determined based on one or more of the following: predefined protocol information, preconfiguration information, network device configuration information, resource pool configuration information, PC5-RRC signaling, indication information sent by the first terminal device, and indication information sent by the second terminal device.

**Embodiment 5: Beam Selection (or CSI-RS Resource Selection) by the Second Terminal Device**

The second terminal device can obtain configuration information. This configuration information can be used to configure CSI-RS resources for beam selection. The configuration information can, for example, be the configuration information described in Embodiment 2. The CSI-RS resources configured based on this configuration information can be periodic or semi-persistent CSI-RS resources. The CSI-RS resources can, for example, be the first CSI-RS resources described in Embodiment 3. Detailed descriptions can be referred to Embodiment 3. After acquiring the CSI-RS resources, the second terminal device can measure these CSI-RS resources and select a preferred transmission beam based on the measurement results. Subsequently, the second terminal device can report the CSI-RS resource information corresponding to the preferred transmission beam to the first terminal device. The selection process of the transmission beam may occur during an initial transmission beam selection process or after a beam failure (i.e., during selection process of a new transmission beam). Embodiment 5 provides a more detailed illustrative example of this transmission beam selection process.

In some implementations, the CSI-RS resource information sent by the second terminal device to the first terminal device (representing that the second terminal device has selected the transmission beam corresponding to this CSI-RS resource information) can be determined based on measurements of M CSI-RS resources, where M is a positive integer greater than or equal to 1.

In some implementations, the M CSI-RS resources can be periodic or semi-persistent CSI-RS resources. For example, they can be M consecutive periodic CSI-RS resources.

In some implementations, the priority of the M CSI-RS resources can be determined based on predefined protocol information, preconfiguration information, or network configuration information.

In some implementations, the priority of the M CSI-RS resources can be the highest or lowest priority among predefined priorities. For example, the priority value of the M CSI-RS resources can be 1 (highest priority), or the priority value can be 8 (lowest priority).

In some implementations, the first terminal device can transmit the M CSI-RS resources using different transmission beams. Alternatively, the first terminal device does not transmit the M CSI-RS resources using the same transmission beam. Alternatively, the second terminal device does not expect the first terminal device to transmit the second CSI-RS resources using the same transmission beam. Alternatively, the second terminal device expects the first terminal device to transmit the second CSI-RS resources using different transmission beams.

In some implementations, the M CSI-RS resources can be part or all CSI-RS resources in the first CSI-RS resource described in Embodiment 3. Therefore, the content related to the first CSI-RS resources in Embodiment 3, if not in conflict, can be applicable to this Embodiment.

In some implementations, the value of M can be determined based on one or more of the following: predefined protocol information, preconfiguration information, network device configuration information, resource pool configuration information, PC5-RRC signaling, indication information sent by the first terminal device, and indication information sent by the second terminal device.

In some implementations, the CSI-RS resource information can be used to indicate the D CSI-RS resources selected by the second terminal device.

For example, the D CSI-RS resources can be selected in descending order based on the measurement results (e.g., sidelink RSRP and/or sidelink SINR) corresponding to the M CSI-RS resources.

Alternatively, the D CSI-RS resources can be selected in descending order based on the measurement results corresponding to C CSI-RS resources. The C CSI-RS resources can correspond to C measurement results, and the measurement values of these C measurement results are all greater than or equal to a third threshold. C is a positive integer greater than or equal to 1, and D is a positive integer less than or equal to C. For example, the default value of C can be 1. If the value of D is 1, the second terminal device can report the CSI-RS resource information corresponding to the maximum measurement result to the first terminal device.

Alternatively, the D CSI-RS resources can be randomly selected from C CSI-RS resources. The C CSI-RS resources can correspond to C measurement results, and the measurement values of these C measurement results are all greater than or equal to a third threshold. C is a positive integer greater than or equal to 1, and D is a positive integer less than or equal to C. For example, the default value of C can be 1. If the value of D is 1, the second terminal device can report any CSI-RS resource information corresponding to a measurement result greater than the third threshold to the first terminal device.

In some implementations, the value of C can be determined based on one or more of the following: predefined protocol information, preconfiguration information, network equipment configuration information, resource pool configuration information, PC5-RRC signaling, indication information sent by the first terminal device, and indication information sent by the second terminal device. The indication information sent by the first terminal device can, for example, be carried by SCI, MAC CE, or PC5-RRC signaling. The indication information sent by the second terminal device can, for example, be carried by SCI, MAC CE, or PC5-RRC signaling.

In some implementations, the value of D can be determined based on one or more of the following: predefined protocol information, preconfiguration information, network equipment configuration information, resource pool configuration information, PC5-RRC signaling, indication information sent by the first terminal device, and indication information sent by the second terminal device. The indication information sent by the first terminal device can, for example, be carried by SCI, MAC CE, or PC5-RRC signaling. The indication information sent by the second terminal device can, for example, be carried by SCI, MAC CE, or PC5-RRC signaling.

In some implementations, the third threshold can be determined based on one or more of the following: predefined protocol information, preconfiguration information, network equipment configuration information, resource pool configuration information, PC5-RRC signaling, indication information sent by the first terminal device, and indication information sent by the second terminal device. The indication information sent by the first terminal device can, for example, be carried by SCI, MAC CE, or PC5-RRC signaling. The indication information sent by the second terminal device can, for example, be carried by SCI, MAC CE, or PC5-RRC signaling.

### Embodiment 6: Beam Failure Indication Information Reporting

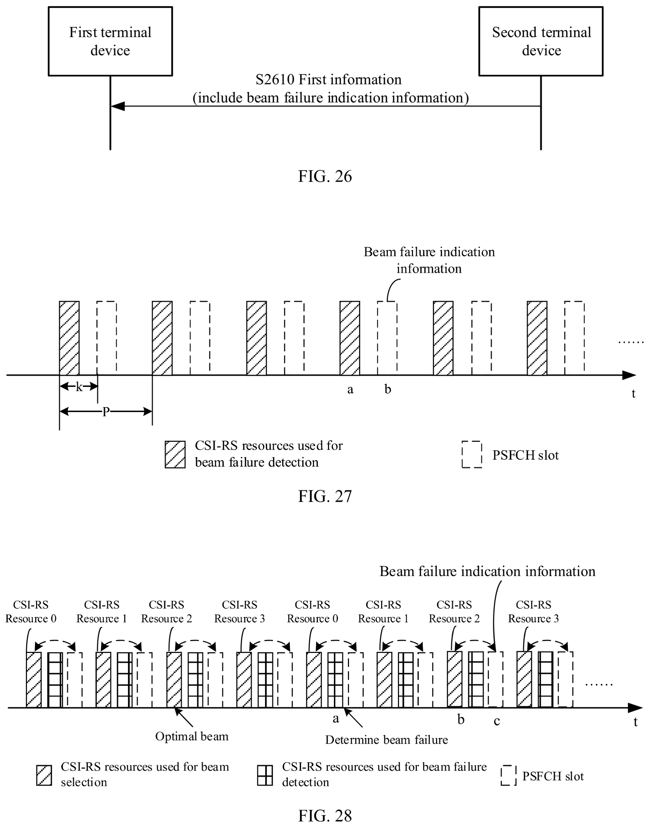

FIG. 26 is a schematic flowchart of a method for sidelink transmission according to an embodiment of the disclosure. Referring to FIG. 26, in step S2610, a first terminal device receives first information reported by a second terminal device. The first information may include beam failure indication information.

In some embodiments, the beam failure indication information may be transmitted together with information w. The information w may include one or more of the following: CSI-RS resource information and measurement results corresponding to the CSI-RS resource information. The CSI-RS resource information mentioned here may be the CSI-RS resource information corresponding to a new transmission beam selected after the beam failure.

In some implementations, the first information may be a 1-bit information. For example, the 1-bit information may include a first value and a second value. If the value of the 1-bit information is the first value, it indicates beam failure; if the value of the 1-bit information is the second value, it indicates no beam failure. Alternatively, the 1-bit information may indicate beam failure through the first value, and if the value of the 1-bit information is the second value, the value has no meaning. The first value may be 0 and the second value may be 1; or the first value may be 1 and the second value may be 0.

The disclosure does not specifically limit the carrying method of the beam failure indication information. For example, the beam failure indication information may be carried on (or indicated by) a first signaling/channel. The first signaling/channel may include one or more of the following: PSFCH, SCI, MAC CE, and PC5-RRC signaling.

In some implementations, the first signaling/channel is PSFCH, and the priority corresponding to the first signaling/channel is determined based on protocol predefinition, preconfiguration information, or network device information.

In some implementations, the first signaling/channel is PSFCH, and the priority corresponding to the first signaling/channel is the highest or lowest priority among predefined priorities. For example, the value of the priority of the first PSFCH may be 1.

In some implementations, the first signaling/channel is SCI, and the priority corresponding to the first signaling/channel is determined based on protocol predefinition, preconfiguration information, or network device information.

In some implementations, the first signaling/channel is SCI, and the priority corresponding to the first signaling/channel is the highest or lowest priority among predefined priorities. For example, the value of the priority of the first SCI may be 1.

In some implementations, the first signaling/channel is MAC CE, and the priority corresponding to the first signaling/channel is determined based on protocol predefinition, preconfiguration information, or network device information.

In some implementations, the first signaling/channel is MAC CE, and the priority corresponding to the first signaling/channel is the highest or lowest priority among predefined priorities. For example, the value of the priority of the MAC CE may be 1.

In some implementations, the first signaling/channel is MAC CE, the SCI sent together with the MAC CE includes information for indicating the activation of sidelink feedback. That is, if the first signaling/channel is MAC CE, the second terminal device activates sidelink feedback. For example, the value of the information field "HARQ feedback enabled/disabled indicator" in the SCI may be set to 1.

In some embodiments, if the first signaling/channel is SCI, the SCI includes information for indicating the activation of sidelink feedback. That is, if the first signaling/channel is SCI, the second terminal device activates sidelink feedback. For example, the value of the information field "HARQ feedback enabled/disabled indicator" in the SCI may be set to 1.

**Embodiment 6.1: The First Signaling/Channel is First PSFCH**

Embodiment 6.1 provides a detailed description of how the beam failure indication information is carried on the first PSFCH.

In some implementations, the time-domain resources of the first PSFCH may include the second-to-last and third-to-last symbols among the symbols in a slot that are available for sidelink transmission. Further, in some implementations, the data transmitted on the second-to-last symbol and the third-to-last symbol may be the same. For example, the first PSFCH may be implemented as illustrated in FIG. 9B described earlier.

In some implementations, a first sequence may be generated based on the beam failure indication information, and then the first sequence is carried on the first PSFCH.

In some implementations, the first PSFCH may occupy K PRBs in the frequency-domain. K may be determined based on protocol predefinition information, preconfiguration information, or network device configuration information. K is a positive integer greater than or equal to 1. For example, K = 1.

For example, if K = 1, the first sequence is a sequence of length t. t represents the number of subcarriers in a PRB. The value of t may be 12.

Alternatively, if K > 1, the first sequence may be a sequence with a length less than or equal to t×K. Then, the first sequence may be mapped onto the subcarriers corresponding to the K PRBs. t represents the number of subcarriers in a PRB. The value of t may be 12.

Alternatively, if K > 1, the first sequence is a sequence of length t. In this case, the sequence mapped to each of the K PRBs may be generated or determined based on the first sequence. t represents the number of subcarriers in a PRB. The value of t may be 12.

The following provides detailed examples of how the first sequence is generated.

The first sequence may be generated based on one or more of the following: a root sequence and a cyclic shift value.

The cyclic shift value may be generated based on one or more of the following: a slot number; the number of subcarriers in a resource block (RB); the number of symbols in a slot; the index of a symbol in the slot used for PSFCH transmission (e.g., the 2$^{nd}$ symbol among multiple symbols used for PSFCH transmission); a pseudo-random sequence; parameter $m_0$ determined based on the quantity of cyclic shift pairs or cyclic shift values; and parameter $m_{cs}$ determined based on whether the beam has failed.

In some implementations, in the case of beam failure, the value of the parameter $m_{cs}$ is 6, and/or in the case of no beam failure, the value of the parameter $m_{cs}$ is 0.

In some implementations, in the case of beam failure, the value of the parameter $m_{cs}$ is 0, and/or in the case of no beam failure, the value of the parameter $m_{cs}$ is 6.

In some implementations, in the case of beam failure, the value of the parameter $m_{cs}$ is 0. The parameter $m_{cs}$ does not have other values, or other values of the parameter $m_{cs}$ have no meaning. In some implementations, in the case of beam failure, the value of the parameter $m_{cs}$ is 6. The parameter $m_{cs}$ does not have other values, or other values of the parameter $m_{cs}$ have no meaning.

For example, the beam failure indication information is a 1-bit information. If the value of the 1-bit information is 1, it indicates beam failure; if the value of the 1-bit information is 0, it has no meaning. Accordingly, if the value of the beam failure indication information is 1, the value of the parameter $m_{cs}$ is 0.

For example, the beam failure indication information is a 1-bit information. If the value of the 1-bit information is 0, it indicates beam failure; if the value of the 1-bit information is 1, it has no meaning. Accordingly, if the value of the beam failure indication information is 0, the value of the parameter $m_{cs}$ is 0.

Exemplary, the first sequence $r_{u,v}^{(\alpha,\delta)}(n)$ can be generated by:

$$r_{u,v}^{(\alpha,\delta)}(n) = e^{j\alpha n}\bar{r}_{u,v}(n), \quad 0 \le n < M_{ZC}$$

where $M_{ZC}$ represents the sequence length, $\bar{r}_{u,v}(n)$ represents a base sequence, $\alpha$ represents a cyclic shift value.

Exemplary, the cyclic shift value can be determined by:

$$\alpha_l = \frac{2\pi}{N_{sc}^{RB}}\left(\left(m_0 + m_{cs} + m_{int} + n_{cs}\left(n_{s,f}^{\mu}, l + l'\right)\right) \bmod N_{sc}^{RB}\right)$$

Where $n_{cs}$ an be determined by:

$$n_{cs}\left(n_{s,f}^{\mu}, l\right) = \sum_{m=0}^{7} 2^m\, c\left(8N_{symb}^{slot}n_{s,f}^{\mu} + 8l + m\right)$$

Where $n_{s,f}^{\mu}$ represents a slot number; $N_{sc}^{RB}$ represents the number of subcarriers included in one RB, $N_{symb}^{slot}$ represents the number of symbols included in one slot, l=0, $l'$ represents the index of the 2nd OFDM symbol among the multiple symbols in a slot used for PSFCH transmission, if parameter $n_{ID}$ is configured by the higher layer, $u = n_{ID} \bmod 30$, otherwise, $u = 0$; $c(i)$ represents a pseudo-random sequence, the generation method of which may refer to the generation method of c(n) described in Embodiment 2. If parameter $n_{ID}$ is configured by the higher layer, $c_{init}=n_{ID}$, otherwise, $c_{init}=0$, $m_{int}=0$.

If the beam failure is indicated by a 1-bit information, there may be the following two ways of indicating the beam failure (hereinafter referred to as Method A and Method B). Under different methods, the determination methods of the values of parameter $m_0$ and parameter $m_{cs}$ are different. The following provides a detailed description of the determination methods of the values of parameter $m_0$ and parameter $m_{cs}$ in combination with Method A and Method B.

**Method A**

If the value of the 1-bit information is 1, it indicates beam failure, and if the value of the 1-bit information is 0, it indicates no beam failure; or, if the value of the 1-bit information is 0, it indicates beam failure, and if the value of the 1-bit information is 1, it indicates no beam failure.

If Method A is adopted to indicate beam failure, the quantity of cyclic shift pairs may be determined by configuration information, and the value of the parameter $m_0$ may be determined according to Table 2 below.

Table 2

| quantity of cyclic shift pairs | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The value of parameter $m_{cs}$ can be determined according to Table 3 or Table 4.

Table 3

| Beam failure or not | 0 (No beam failure) | 1 (Beam failure) |
|---|---|---|
| $m_{cs}$ | 0 | 6 |

Table 4

| Beam failure or not | 0 (No beam failure) | 1 (Beam failure) |
|---|---|---|
| $m_{cs}$ | 6 | 0 |

## Method B

It is defined such that a value of 1 for the 1-bit information indicates beam failure; if the value of the 1-bit information is 0, it has no meaning. Of course, it is also possible to define that a value of 0 for the 1-bit information indicates beam failure; if the value of the 1-bit information is 1, it has no meaning. In this case, the quantity of cyclic shift pairs or the quantity of cyclic shift values may be determined by configuration information. If the quantity of cyclic shift pairs is configured, the value of $m_0$ may be determined based on Table 2. If the quantity of cyclic shift values is configured, the value of $m_0$ may be determined based on Table 5 given below.

Table 5

| quantity of cyclic shift values | $m_0$ | | | | | | | | | | | |
|---|---|---|---|---|---|---|---|---|---|---|---|---|
| | cyclic shift value index 0 | cyclic shift value index 1 | cyclic shift value index 2 | cyclic shift value index 3 | cyclic shift value index 4 | cyclic shift value index 5 | cyclic shift value index 6 | cyclic shift value index 7 | cyclic shift value index 8 | cyclic shift value index 9 | cyclic shift value index 10 | cyclic shift value index 11 |
| 1 | 0 | - | - | - | - | - | - | - | - | - | - | - |
| 2 | 0 | 3 | - | - | - | - | - | - | - | - | - | - |
| 3 | 0 | 2 | 4 | - | - | - | - | - | - | - | - | - |
| 6 | 0 | 1 | 2 | 3 | 4 | 5 | - | - | - | - | - | - |
| 12 | 0 | 1 | 2 | 3 | 4 | 5 | 6 | 7 | 8 | 9 | 10 | 11 |

The value of Parameter $m_{cs}$ is determined according to Table 6 or Table 7 given below.

Table 6

| Beam failure or not | 0 (Beam failure) |
|---|---|
| $m_{cs}$ | 0 |

Table 7

| Beam failure or not | 1 (Beam failure) |
|---|---|
| $m_{cs}$ | 0 |

The following describes the method for determining the time-domain resources (or time-domain position) of the first PSFCH.

In some implementations, the time-domain resources of the first PSFCH may be determined based on the time-domain position of the CSI-RS resources used for beam failure detection. For example, it may be determined based on the time-domain position of A CSI-RS resources used to determine whether to report the first indication information (such as BFI indication) to the higher layer (for a detailed description of the CSI-RS resources used for beam failure detection, refer to Embodiment 4). The time-domain resources of the first PSFCH may be determined based on the time-domain position of the last CSI-RS resource among the A CSI-RS resources.

For example, during the process of determining a beam failure instance (BFI) (for a detailed description, refer to the reporting process of the first indication information in Embodiment 4, here mainly taking the first indication information as BFI for illustration), whether a BFI occurs is determined based on the measurement results of the A CSI-RS resources. The time-domain unit where the first PSFCH is located may be determined based on the time-domain unit where the last CSI-RS resource among the A CSI-RS resources is located. This is because the second terminal device determines whether a BFI occurs based on the measurement results of the A CSI-RS resources. If a BFI occurs, the second terminal device reports a BFI indication to the higher layer of the second terminal device. After receiving the BFI indication, the higher layer of the second terminal device increments the first counter and further determines whether a beam failure occurs based on the value of the counter. If a beam failure occurs, the second terminal device may carry the beam failure indication information on the first PSFCH and report the beam failure indication information to the first terminal device via the first PSFCH.

Referring to FIG. 27, an example is provided with A = 1. According to the configuration information, a periodic CSI-RS resource is determined, with a period of P. For each CSI-RS resource, there is a corresponding PSFCH resource, which is used to carry the beam failure indication information, and the time interval between the CSI-RS resource and its associated PSFCH resource is k slots. The second terminal device may perform measurement on the CSI-RS resource and then determine whether the beam failure condition is met. If it is determined that the beam failure condition is met based on the measurement results of the CSI-RS sent in slot a, then the second terminal device may carry the beam failure indication information on the PSFCH resource associated with the CSI-RS resource of slot a (i.e., the PSFCH in slot b illustrated in FIG. 27). Then, the second terminal device may report the beam failure indication information to the first terminal device via this PSFCH.

In some implementations, the time-domain resources of the first PSFCH may be determined based on the time-domain position of indication information A. The indication information A may be used to indicate the second terminal device to report the beam failure indication information.

Optionally, the indication information A may be used to trigger the second terminal device to report the beam failure indication information.

Optionally, the indication information A may be carried in SCI and/or MAC CE, and the time-domain resources of the first PSFCH may be determined based on the time-domain position of the SCI or MAC CE.

For example, the first terminal device sends indication information A to the second terminal device in slot n, which is used to indicate the second terminal device to report the beam failure indication information. The indication information A may be carried on SCI or MAC CE. The second terminal device determines that the first PSFCH is the 1st available PSFCH in the resource pool not earlier than slot n+k. Alternatively, the second terminal device determines that the first PSFCH is the 1st available PSFCH in the resource pool after slot n+k. The second terminal device may use this first PSFCH to carry the beam failure indication information. Optionally, the value of parameter k may be determined based on one or more of the following: protocol predefinition information, preconfiguration information, network device configuration information, PC5-RRC signaling, indication information from the first terminal, or indication information from the second terminal.

In some implementations, the time-domain resources of the first PSFCH may be determined based on the time-domain position of the first target CSI-RS resource. The first target CSI-RS resource is associated with the CSI-RS resource selected by the second terminal device after detecting a beam failure. The first terminal device may determine the time-domain unit of the PSFCH associated with the CSI-RS resource according to the CSI-RS resource. If a PSFCH carrying the beam failure indication information (i.e., the first PSFCH mentioned above) is detected in this time-domain unit, it can be determined that a beam failure has occurred. In this implementation, the new beam selected by the second terminal device is the beam corresponding to the CSI-RS resource associated with this PSFCH.

For example, as illustrated in FIG. 28, CSI-RS resources for beam selection and CSI-RS resources for beam failure detection are configured. Moreover, for the CSI-RS resource corresponding to each beam, there is a corresponding PSFCH resource. In the example of FIG. 28, the first terminal device supports four transmission beams, thus sending CSI-RS using the four transmission beams in turn, as illustrated by CSI-RS 0 to CSI-RS 3 in FIG. 28. The second terminal device determines that the beam corresponding to CSI-RS 2 is the optimal transmission beam. Therefore, when the second terminal device determines a beam failure based on the CSI-RS sent in slot a, the time-domain position of the PSFCH for carrying the beam failure indication information may be determined based on the CSI-RS resource corresponding to the beam selected by the second terminal device. The CSI-RS 2 corresponding to the 1st optimal beam after slot a is located in slot b, hence based on the CSI-RS resource in slot b, it can be determined that the PSFCH (i.e., the first PSFCH mentioned above) resource is located in slot c. Thus, the second terminal device may use the PSFCH in slot c to carry the beam failure indication information.

In some implementations, the frequency-domain resources and/or code-domain resources of the first PSFCH may be determined based on one or more of the following: index information of a PRB corresponding to the start position of the CSI-RS frequency-domain resource; subchannel information corresponding to the start position of the CSI-RS frequency-domain resource; subcarrier information corresponding to the start position of the CSI-RS frequency-domain resource; the number of PRBs available for transmitting CSI-RS in a slot; the size of the frequency-domain resource occupied by one CSI-RS (e.g., represented by the number of PRBs); a scrambling identifier (ScramblingID) used to generate the CSI-RS sequence; a CSI-RS resource set identifier; a CSI-RS resource identifier (e.g., the identifier of the CSI-RS resource selected by the second terminal device within the CSI-RS resource set); a CSI-RS transmission opportunity index; a time-domain position and/or frequency-domain start position of the time-frequency resource carrying indication information X; source identification information; destination identification information; the number of PSFCHs that can be multiplexed via code division multiplexing on a block of frequency-domain resource; the number of PRBs available for PSFCH transmission in a slot.

The above-mentioned CSI-RS resource set identifier may be an index corresponding to the CSI-RS resource set determined based on configuration information. For example, at least two CSI-RS resource sets may be determined based on configuration information. One of these two CSI-RS resource sets is used to determine the transmission beam, and the "repetition" parameter of this CSI-RS resource set is set to "off". The other CSI-RS resource set of these two CSI-RS resource sets is used to determine the reception beam, and the "repetition" parameter of this CSI-RS resource set is set to "on". The indices corresponding to these two resource sets may be 0 and 1, respectively, and these indices may serve as the CSI-RS resource set identifiers mentioned above.

The above-mentioned CSI-RS transmission opportunity index may be the index of the CSI-RS resource selected by the second terminal device within a CSI-RS transmission opportunity set. For example, a CSI-RS transmission opportunity set includes Y CSI-RS transmission slots, with corresponding indices ranging from [0, Y-1]. If the CSI-RS resource selected by the second terminal device is the $2^{nd}$ CSI-RS resource in this set of CSI-RS resources, then the transmission resource of the PSFCH carrying the beam failure indication information may be determined based on the index of this CSI-RS resource in the CSI-RS transmission opportunity set, i.e., an index value of 1.

The above-mentioned source identification information may be the source identification information carried in SCI. For example, this source identification information may be the identifier of the first terminal device.

The above-mentioned destination identification information may be the destination identification information carried in SCI. For example, this destination identification information may be the identifier of the second terminal device, the group identifier of the terminal group to which the second terminal device belongs, or the member identifier of the second terminal device, etc.

The above-mentioned indication information X may be sent by the first terminal device, and this indication information X may be used to indicate the second terminal device to report CSI-RS resource information; or, this indication information X may be used to indicate the second terminal device to report beam failure indication information.


**Embodiment 6.2: The First Signaling/Channel is SCI, MAC CE, or PC5-RRC signaling**

In some implementations, the sidelink transmission resource used for transmitting the first signaling/channel is configured by the network device. For example, under Mode 1, the second terminal device sends a scheduling request (SR) to the network device. Upon receiving the SR, the network device configures the sidelink transmission resource used for the second terminal device to transmit the first signaling/channel.

In some implementations, the sidelink transmission resources for transmitting the first signaling/channel are determined by the second terminal device within a first time period. For example, under Mode 2, the second terminal device determines the sidelink transmission resources for transmitting the first signaling/channel within the first time period.

In some implementations, if the first signaling/channel is a MAC CE, the PSSCH carries only the MAC CE, or the PSSCH carries only the second-order SCI and the MAC CE.

In some implementations, if the first signaling/channel is a MAC CE, the PSSCH carries the second-order SCI, the MAC CE, and other sidelink data.

In some implementations, the start time of the aforementioned first time period may be determined based on the time-domain position of the last CSI-RS resource among the A CSI-RS resources used for beam failure detection (for a detailed description of the A CSI-RS resources, refer to Embodiment 4).

For example, if the last CSI-RS transmission resource among the A CSI-RS transmission resources is located in time-domain unit n, then the start position of the first time period may be time-domain unit n+T3. Here, T3 is a time interval. T3 is an integer greater than or equal to 0, and T3 may be 1, 4, 6, 11, or 21 slots. The value of T3 may be determined based on protocol predefinition information, preconfiguration information, network device configuration information, PC5-RRC signaling, indication information from the first terminal, or indication information from the second terminal. The value of T3 may be related to the sidelink subcarrier spacing, that is, different sidelink subcarrier spacing may result in different values of T3.

In some implementations, the start time of the first time period may be determined based on one or more of the following: the time-domain position of indication information B and the time interval T4. Indication information B may be sent by the first terminal device and may be used to indicate the second terminal device to report beam failure indication information or CSI-RS resource information. Optionally, indication information B may be carried in SCI and/or MAC CE, and the start time of the first time period may be determined based on the time-domain unit where the SCI or MAC CE is located. For example, the start time (e.g., the starting time-domain unit) of the first time period may be the time-domain unit where the SCI or MAC CE is located. Alternatively, the start time (e.g., the starting time-domain unit) of the first time period may be the sum of the time-domain unit where the SCI or MAC CE is located and the time interval T4. T4 is an integer greater than or equal to 0, and T4 may be 1, 4, 6, 11, or 21 slots. The value of T4 may be determined based on protocol predefinition information, preconfiguration information, network device configuration information, PC5-RRC signaling, indication information from the first terminal, or indication information from the second terminal. The value of T4 may be related to the sidelink subcarrier spacing, that is, different sidelink subcarrier spacing may result in different values of T4.

In some implementations, the start time of the first time period may be determined based on the time-domain position of the first target CSI-RS resource. The first target CSI-RS resource may be associated with the CSI-RS resource selected by the second terminal device after detecting a beam failure. For example, if the time-domain unit where the CSI-RS resource corresponding to the optimal transmission beam selected by the second terminal device is located is n, then the start time of the first time period may be time-domain unit n+T5. Here, T5 is a time interval. T5 is an integer greater than or equal to 0. For example, T5 may be 1, 4, 6, 11, or 21 slots. The value of T5 may be determined based on preconfiguration information, network device configuration information, PC5-RRC signaling, indication information from the first terminal, or indication information from the second terminal. The value of T5 may be related to the sidelink subcarrier spacing, that is, different sidelink subcarrier spacing may result in different values of T5.

In some implementations, the end time of the first time period may be determined based on one or more of the following: protocol predefinition information, preconfiguration information, network device configuration information, resource pool configuration information, PC5-RRC signaling, indication information sent by the first terminal device, and indication information sent by the second terminal device.

In some implementations, the duration corresponding to the first time period may be determined based on one or more of the following: protocol predefinition information, preconfiguration information, network device configuration information, resource pool configuration information, PC5-RRC signaling, indication information sent by the first terminal device, and indication information sent by the second terminal device.

Optionally, the indication information sent by the first terminal device is used to indicate a first latency boundary, and the end time of the first time period may be determined based on the start time of the first time period and the first latency boundary.

For example, the first terminal device sends indication information to the second terminal device, the indication information is used to indicate a first latency boundary. The duration corresponding to the first time period may be determined based on this first latency boundary. Alternatively, the end time of the first time period may be determined based on the start time of the first time period and this first latency boundary. The second terminal device may determine the duration of a timer based on the duration corresponding to the first latency boundary, and the second terminal device should report the beam failure indication information to the first terminal device before the timer expires or fails. The sidelink transmission resource determined by the second terminal device for reporting the beam failure indication information should be located before the timer expires or fails. The second terminal device may start the aforementioned timer upon receiving indication information from the first terminal device that indicates CSI-RS transmission, or upon receiving indication information from the first terminal device that indicates the second terminal device to report beam failure indication information, or upon receiving information from the first terminal device that indicates the second terminal device to report CSI-RS resource information, or upon receiving the 1st CSI-RS or last CSI-RS used to determine the transmission beam.

In some implementations, when the first signaling/channel is SCI, MAC CE, or PC5-RRC signaling, the first signaling/channel may simultaneously carry the beam failure indication information and information w. The information w may include one or more of the following: CSI-RS resource information and measurement results corresponding to the CSI-RS resource information.

Optionally, the beam failure indication information and information w may be carried on the same signaling. For example, the beam failure indication information and information w may be carried on the same SCI. The beam failure indication information and information w may be carried on the same MAC CE.

Optionally, the beam failure indication information and information w may be carried on different signaling. For example, the beam failure indication information may be carried on SCI, and information w may be carried on MAC CE.

In some implementations, the beam failure indication information or information w may be carried on multiple types of signaling. For example, the beam failure indication information may be carried on both SCI and MAC CE simultaneously. Alternatively, the beam failure indication information may be carried on SCI, and the beam failure indication information and CSI-RS resource indication information may be carried on MAC CE.

### Embodiment 7: CSI-RS resource information reporting

As previously described, in the process of determining the transmission beam, the first terminal device needs to send CSI-RS to the second terminal device so that the second terminal device can measure the received CSI-RS. Subsequently, the second terminal device selects the CSI-RS resource based on the measurement results of the CSI-RS and reports the selected CSI-RS resource to the first terminal device.

Furthermore, after beam failure detection, the second terminal device can determine a new transmission beam. The process of determining the new transmission beam is similar to the process of determining the initial transmission beam and also requires the second terminal device to select the CSI-RS resource based on the measurement results of the CSI-RS and report the selected CSI-RS resource to the first terminal device.

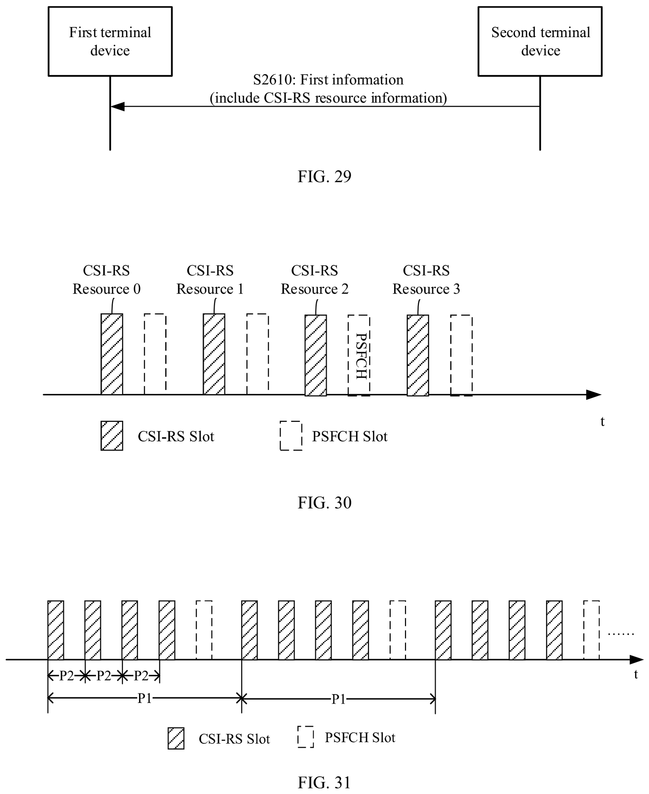

It can be seen from the above description that if the sidelink system introduces beam-based transmission, the reporting of CSI-RS resource information will be involved in many scenarios. Embodiment 7, in combination with FIG. 29, provides a detailed example of the reporting method for CSI-RS resource information.

FIG. 29 is a schematic flowchart of a method for sidelink transmission according to an embodiment of the disclosure. Referring to FIG. 29, in step S2910, the first terminal device receives first information reported by the second terminal device.

The first information may include one or more of the following: CSI-RS resource information and the measurement results corresponding to the CSI-RS resource information. The CSI-RS resource information may be used to indicate the CSI-RS resource selected by the second terminal device. The transmission beam corresponding to the CSI-RS resource may be the initial transmission beam or the new transmission beam selected after a beam failure.

This disclosure does not specifically limit the method for carrying the CSI-RS resource information. For example, the CSI-RS resource information may be carried on (or indicated by) a second signaling/channel. The second signaling/channel may include one or more of the following: PSFCH, SCI, MAC CE, and PC5-RRC signaling.

In some implementations, the second signaling/channel is PSFCH, and the priority corresponding to the second signaling/channel is determined based on protocol predefinition, preconfiguration information, or network device information.

In some implementations, the second signaling/channel is PSFCH, and the priority corresponding to the second signaling/channel is the highest or lowest priority among predefined priorities. For example, the priority value of the first PSFCH may be 1.

In some implementations, the second signaling/channel is SCI, and the priority corresponding to the second signaling/channel is determined based on protocol predefinition, preconfiguration information, or network device information.

In some implementations, the second signaling/channel is SCI, and the priority corresponding to the second signaling/channel is the highest or lowest priority among predefined priorities. For example, the priority value of the first SCI may be 1.

In some implementations, the second signaling/channel is MAC CE, and the priority corresponding to the second signaling/channel is determined based on protocol predefinition, preconfiguration information, or network device information.

In some implementations, the second signaling/channel is MAC CE, and the priority corresponding to the second signaling/channel is the highest or lowest priority among predefined priorities. For example, the priority value of the MAC CE may be 1.

In some implementations, if the second signaling/channel is MAC CE, the SCI sent together with the MAC CE includes information for indicating the activation of sidelink feedback. That is, if the second signaling/channel is MAC CE, the second terminal device activates sidelink feedback. For example, the value of the information field "HARQ feedback enabled/disabled indicator" in the SCI may be set to 1.

In some implementations, if the second signaling/channel is SCI, the SCI includes information for indicating the activation of sidelink feedback. That is, if the second signaling/channel is SCI, the second terminal device activates sidelink feedback. For example, the value of the information field "HARQ feedback enabled/disabled indicator" in the SCI may be set to 1.

### Embodiment 7.1: The Second Signaling/Channel is Second PSFCH

In some implementations, the second PSFCH may include a 1-bit information. When the value of this 1-bit information is a first value, the 1-bit information may be used to indicate that the CSI-RS resource associated with the second PSFCH is the CSI-RS resource selected by the second terminal device. The first value may be 0 or 1.

In some implementations, the frequency-domain resource of the second PSFCH is 1 PRB.

In some implementations, the time-domain resource of the second PSFCH include 2 symbols, which are respectively located at the second-to-last and third-to-last symbols among the time-domain symbols available for sidelink transmission in a slot. Optionally, the same data may be transmitted on the second-to-last symbol and the third-to-last symbol.

In some implementations, the transmission resources of the second PSFCH are associated with the transmission resources of the selected CSI-RS resource (e.g., the time-domain position where the CSI-RS resource is located). For example, the time-domain resources of the second PSFCH may be determined based on the time-domain position of the selected CSI-RS resource.

Exemplarily, one PSFCH may be associated with each CSI-RS resource. If the second terminal device selects a certain CSI-RS resource, the PSFCH associated with this CSI-RS resource is the second PSFCH. Therefore, by detecting the PSFCH, the CSI-RS resource information associated with it can be implicitly determined.

In some implementations, the frequency-domain resources of the second PSFCH include one PRB.

In some implementations, there is a time interval T6 between the second PSFCH and the CSI-RS resource selected by the second terminal device. The time interval T6 may be determined based on one or more of the following: protocol predefinition information, preconfiguration information, network device configuration information, resource pool configuration information, PC5-RRC signaling, indication information sent by the first terminal device, and indication information sent by the second terminal device.

For example, the slot where the PSFCH is located is separated from the slot where the CSI-RS resource is located by m slots. If the second terminal device sends the CSI-RS in slot n, then it detects whether there is a PSFCH carrying the CSI-RS resource information in slot n+m. If this PSFCH is detected, it indicates that this PSFCH is the second PSFCH mentioned above, and the CSI-RS resource associated with this PSFCH is the CSI-RS resource selected by the second terminal device, and the transmission beam corresponding to this CSI-RS resource is the preferred transmission beam.

Alternatively, the slot where the PSFCH is located is separated from the slot where the CSI-RS resource is located by m slots. If the second terminal device sends the CSI-RS in slot n, then it detects whether there is a PSFCH carrying the CSI-RS resource information in slot n+m. If the 1-bit information carried by this PSFCH is detected to have a value of 1 (or 0), it indicates that this PSFCH is the second PSFCH mentioned above, and the CSI-RS resource associated with this PSFCH is the CSI-RS resource selected by the second terminal device, and the transmission beam corresponding to this CSI-RS resource is the preferred transmission beam.

As a more specific example, refer to FIG. 30, where periodic CSI-RS resources are configured for the second terminal device to determine the transmission beam. In the example of FIG. 30, the first terminal device supports 4 transmission beams. Therefore, the first terminal device sends 4 CSI-RSs using the 4 beams respectively, and each CSI-RS has its corresponding PSFCH slot. When the first terminal device detects a PSFCH (or the 1-bit information carried by the PSFCH has a value of 1 (or 0)) in the PSFCH slot corresponding to CSI-RS resource 2, it can be determined that the beam corresponding to CSI-RS resource 2 is the preferred transmission beam.

In some implementations, the CSI-RS resource selected by the second terminal device belongs to the first group of CSI-RS resources. The transmission resources of the second PSFCH are associated with the transmission resources of the first group of CSI-RS resources.

In some implementations, the CSI-RS resource information may be used to indicate L CSI-RS resources selected by the second terminal device from the first group of CSI-RS resources. L is a positive integer greater than or equal to 1.

In some implementations, the value of L may be determined based on one or more of the following: protocol predefinition information, preconfiguration information, network device configuration information, resource pool configuration information, PC5-RRC signaling, indication information sent by the first terminal device, and indication information sent by the second terminal device.

In some implementations, the second PSFCH may carry $E \times L$ information bits. E is used to indicate the number of bits required to carry one CSI-RS resource among the L CSI-RS resources.

In some implementations, the second PSFCH may carry E information bits. E is used to indicate the number of bits required to carry one CSI-RS resource among the L CSI-RS resources.

In some implementations, the value of E may be determined based on one or more of the following: protocol predefinition information, preconfiguration information, network device configuration information, resource pool configuration information, PC5-RRC signaling, indication information sent by the first terminal device, and indication information sent by the second terminal device.

In some implementations, the frequency-domain resources of the second PSFCH include Q PRBs. Q is a positive integer greater than 1. For example, Q may be 4, 8, 12, or 16.

In some embodiments, the value of Q is determined based on one or more of the following: protocol predefinition information, preconfiguration information, network device configuration information, resource pool configuration information, PC5-RRC signaling, indication information sent by the first terminal device, and indication information sent by the second terminal device.

In some implementations, the time-domain resources of the second PSFCH are determined based on a certain CSI-RS resource in the first group of CSI-RS resources. For example, the time-domain resources of the second PSFCH are determined based on the time-domain position of the last CSI-RS resource in the time-domain among the first group of CSI-RS resources. For example, as illustrated in FIG. 31, a group of CSI-RS resources includes 4 CSI-RS resources, and a group of CSI-RS resources corresponds to one PSFCH slot. The second terminal device may select an optimal CSI-RS resource based on the measurement results of the individual CSI-RS resources in a group of CSI-RS resources, and carry the CSI-RS resource information (e.g., index information) corresponding to the CSI-RS resource on the PSFCH (i.e., the second PSFCH mentioned above) to feedback to the first terminal device.

In some implementations, the CSI-RS resource information includes CSI-RS index information, which is used to indicate the index of the selected CSI-RS resource in the first group of CSI-RS resources. For example, the first group of CSI-RS resources includes 4 CSI-RS resources, with corresponding CSI-RS resource index values of 0, 1, 2, and 3, respectively. If the index value indicated in the CSI-RS resource information is 2, it indicates the 3rd CSI-RS resource among the 4 CSI-RS resources included in the first group of CSI-RS resources.

In some implementations, the frequency-domain resources and/or code-domain resources of the first PSFCH may be determined based on one or more of the following: index information of a PRB corresponding to the start position of the CSI-RS frequency-domain resources; subchannel information corresponding to the start position of the CSI-RS frequency-domain resources; subcarrier information corresponding to the start position of the CSI-RS frequency-domain resources; the number of PRBs available for CSI-RS transmission in a slot; the size of the frequency-domain resources occupied by one CSI-RS (e.g., represented by the number of PRBs); a scrambling identifier (ScramblingID) used to generate the CSI-RS sequence; a CSI-RS resource set identifier; a CSI-RS resource identifier (e.g., the identifier of the CSI-RS resource selected by the second terminal device within the CSI-RS resource set); a CSI-RS transmission opportunity index; a time-domain position and/or frequency-domain start position of the time-frequency resources carrying indication information V; source identification information; destination identification information; the number of PSFCHs that can be multiplexed via code division multiplexing on a block of frequency-domain resource; the number of PRBs available for PSFCH transmission in a slot.

The above-mentioned CSI-RS resource set identifier may be an index corresponding to the CSI-RS resource set determined based on configuration information. For example, at least two CSI-RS resource sets may be determined based on configuration information. One of these two CSI-RS resource sets is used to determine the transmission beam, and the "repetition" parameter of this CSI-RS resource set is set to "off". The other CSI-RS resource set is used to determine the reception beam, and the "repetition" parameter of this CSI-RS resource set is set to "on". The indices corresponding to these two resource sets may be 0 and 1, respectively, and these indices may serve as the CSI-RS resource set identifiers mentioned above.

The above-mentioned CSI-RS transmission opportunity index may be the index of the CSI-RS resource selected by the second terminal device within a CSI-RS transmission opportunity set. For example, a CSI-RS transmission opportunity set includes Y CSI-RS transmission slots, with corresponding index ranges of [0, Y-1]. If the CSI-RS resource selected by the second terminal device is the second CSI-RS resource in this set of CSI-RS resources, then the transmission resources of the PSFCH for the CSI-RS resource information may be determined based on the index of this CSI-RS resource in the CSI-RS transmission opportunity set, that is, an index value of 1.

The above-mentioned source identification information may be the source identification information carried in SCI. For example, this source identification information may be the identifier of the first terminal device.

The above-mentioned destination identification information may be the destination identification information carried in SCI. For example, this destination identification information may be the identifier of the second terminal device, the group identifier of the terminal group to which the second terminal device belongs, or the member identifier of the second terminal device, etc.

The above-mentioned indication information V may be sent by the first terminal device, and this indication information V may be used to indicate the second terminal device to report CSI-RS resource information; or, this indication information V may be used to indicate the second terminal device to report beam failure indication information.

### Embodiment 7.2: The Second Signaling/Channel is SCI or MAC CE

In some implementations, the sidelink transmission resources for transmitting the second signaling/channel are configured by the network device. For example, under Mode 1, the second terminal device sends a scheduling request (SR) to the network device. Upon receiving the SR, the network device configures the sidelink transmission resources for the second terminal device to transmit the second signaling/channel.

In some implementations, the sidelink transmission resources for transmitting the second signaling/channel are determined by the second terminal device within a second time period. For example, under Mode 2, the second terminal device determines the sidelink transmission resources for transmitting the second signaling/channel within the second time period.

In some implementations, the second signaling/channel is a MAC CE, the PSSCH carries only the MAC CE, or the PSSCH carries only the second-order SCI and the MAC CE.

In some implementations, if the second signaling/channel is a MAC CE, the PSSCH carries the second-order SCI, the MAC CE, and other sidelink data.

In some implementations, the start time of the second time period may be determined based on one or more of the following: the time-domain position of the last CSI-RS resource in the first group of CSI-RS resources in the time-domain, and the time interval T7. The first group of CSI-RS resources is the group of CSI-RS resources in which the CSI-RS resource selected by the second terminal device is located. For example, if the slot where the last CSI-RS resource in this group of CSI-RS resources is located is slot n, then the start position of the second time period may be slot n+T7. For example, T7 may be 1, 4, 6, 11, or 21 slots. The value of T7 may be determined based on preconfiguration information, network device configuration information, PC5-RRC signaling, indication information from the first terminal, or indication information from the second terminal. The value of T7 may be related to the sidelink subcarrier spacing, that is, different sidelink subcarrier spacing may result in different values of T7.

In some implementations, the start time of the second time period may be determined based on one or more of the following: the time-domain position of the CSI-RS resource selected by the second terminal device, and the time interval T8. For example, if the time-domain position of the CSI-RS resource selected by the second terminal device is slot n, then the start position of the second time period may be slot n+T8. For example, T8 may be 1, 4, 6, 11, or 21 slots. The value of T8 may be determined based on preconfiguration information, network device configuration information, PC5-RRC signaling, indication information from the first terminal, or indication information from the second terminal. The value of T8 may be related to the sidelink subcarrier spacing, that is, different sidelink subcarrier spacing may result in different values of T8.

In some implementations, the end time of the second time period may be determined based on one or more of the following: protocol predefinition information, preconfiguration information, network device configuration information, resource pool configuration information, PC5-RRC signaling, indication information sent by the first terminal device, and indication information sent by the second terminal device.

In some implementations, the duration corresponding to the second time period may be determined based on one or more of the following: protocol predefinition information, preconfiguration information, network device configuration information, resource pool configuration information, PC5-RRC signaling, indication information sent by the first terminal device, and indication information sent by the second terminal device.

Optionally, the indication information sent by the first terminal device may be used to indicate a second latency boundary, and the end time of the second time period may be determined based on the start time of the second time period and the second latency boundary.

For example, the first terminal device sends indication information to the second terminal device, which is used to indicate the second latency boundary. The duration corresponding to the second time period may be determined based on this second latency boundary. Alternatively, the end time of the second time period may be determined based on the start time of the second time period and this second latency boundary. The second terminal device may determine the duration of a timer based on the duration corresponding to the second latency boundary, and the second terminal device should report the CSI-RS resource information to the first terminal device before the timer expires or fails. The sidelink transmission resources determined by the second terminal device for reporting the CSI-RS resource information should be located before the timer expires or fails. The second terminal device may start the aforementioned timer upon receiving indication information from the first terminal device that indicates CSI-RS transmission, or upon receiving indication information from the first terminal device that indicates the second terminal device to report beam failure indication information, or upon receiving indication information from the first terminal device that indicates the second terminal device to report CSI-RS resource information, or upon receiving the 1st CSI-RS or last CSI-RS used to determine the transmission beam.

The following describes the conditions under which the second terminal device reports CSI-RS resource information to the first terminal device.

In some implementations, the reporting of the CSI-RS resource information may include one or more of the following: condition based reporting, trigger based reporting, and periodic reporting.

Condition based reporting may include: if the second terminal device determines that a beam failure has occurred, the second terminal device reports the CSI-RS resource information to the first terminal device.

Trigger based reporting may include: if the second terminal device receives indication information sent by the first terminal device, and the indication information indicates the second terminal device to report CSI-RS resource information, the second terminal device reports the CSI-RS resource information to the first terminal device.

Trigger based reporting may also include: if the second terminal device receives indication information sent by the first terminal device, and the indication information indicates the second terminal device to report beam failure indication information, the second terminal device reports the CSI-RS resource information to the first terminal device.

Trigger based reporting may also include: if the second terminal device receives indication information sent by the first terminal device, and the indication information indicates the second terminal device to report beam failure indication information, the second terminal device reports the beam failure indication information and the CSI-RS resource information together to the first terminal device.

Trigger based reporting may also include: if the second terminal device receives indication information sent by the first terminal device, and the indication information indicates the second terminal device to report beam failure indication information, the second terminal device reports the beam failure indication information and the CSI-RS resource information separately to the first terminal device.

It should be understood that the CSI-RS or CSI-RS resources mentioned in various embodiments of the disclosure may refer to sidelink CSI-RS or sidelink CSI-RS resources. The CSI-RS resources mentioned in various embodiments of the disclosure may also be referred to as or replaced with CSI-RS transmission resources.

It should also be understood that the symbols mentioned in various embodiments of the disclosure may refer to or be replaced with time-domain symbols or OFDM symbols.

It should also be understood that the time-domain positions mentioned in various embodiments of the disclosure may refer to or be replaced with time-domain units or time-domain resources.

It should also be understood that the time-domain units or time-domain positions mentioned in various embodiments of the disclosure may refer to slots or OFDM symbols.

It should also be understood that when determining the time-domain position of transmission resources based on a certain time-domain unit or time unit in various embodiments of the disclosure, the time-domain position of the transmission resources may be determined based on the start position of the time-domain unit or time unit, or the time-domain position of the transmission resources may be determined based on the end position of the time-domain unit or time unit.

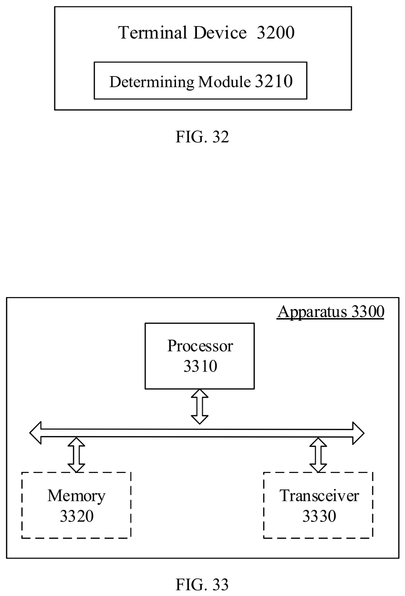

The above description, in combination with FIG. 1 to FIG. 31, provides a detailed description of the method embodiments of the disclosure. The following, in combination with FIG. 32 to FIG. 33, provides a detailed description of the apparatus embodiments of the disclosure. It should be understood that the description of the method embodiments corresponds to the description of the apparatus embodiments, and therefore, parts not described in detail may refer to the preceding method embodiments.

FIG. 32 is a structural diagram of a terminal device according to embodiments of the disclosure. The terminal device 3200 illustrated in FIG. 32 may be the first terminal device or the second terminal device mentioned in any of the preceding embodiments. The terminal device 3200 may include a determining module 3210. The determining module 3210 is configured to determine a first CSI-RS resource. The first CSI-RS resource is a periodic or semi-persistent sidelink CSI-RS resource. The first terminal device is configured to transmit the CSI-RS, and the second terminal device is configured to receive the CSI-RS.

Optionally, in some implementations, the first CSI-RS resource is used for performing one or more of the following operations: determining a spatial domain transmission filter; determining a spatial domain receive filter; and beam failure detection.

Optionally, in some implementations, the first CSI-RS being used for determining a spatial domain transmission filter includes one or more of the following: the first CSI-RS is used for determining an initial spatial domain transmission filter; and the first CSI-RS is used for determining a new spatial domain transmission filter after a beam failure occurs.

Optionally, in some implementations, the first CSI-RS resource is associated with one or more of the following: a periodic CSI-RS transmission opportunity; and a periodic CSI-RS transmission opportunity set.

Optionally, in some implementations, one CSI-RS transmission opportunity set in the periodic CSI-RS transmission opportunity set contains periodic CSI-RS transmission opportunities.

Optionally, in some implementations, the first CSI-RS resource is determined based on one or more of the following parameters: a first parameter for determining the time-domain position of the 1st CSI-RS resource in the first CSI-RS resource; a second parameter for indicating a period value corresponding to the periodic CSI-RS transmission opportunity; a third parameter for indicating a period value corresponding to the periodic CSI-RS transmission opportunity set; and a fourth parameter for indicating the number of CSI-RS transmission opportunities included in one CSI-RS transmission opportunity set in the periodic CSI-RS transmission opportunity set.

Optionally, in some implementations, the first parameter includes one or more of the following: the time-domain position of a first time-domain unit; and a first time interval.

Optionally, in some implementations, the first time-domain unit is determined based on a time-domain unit where the target information is located and/or a reference time-domain unit indicated by the first terminal device, where the target information includes one or more of the following: activation information for activating the CSI-RS resource; indication information for indicating CSI-RS transmission; indication information for indicating to report CSI-RS resource information; indication information for indicating to report beam failure information; indication information for indicating to report RSRP or SINR; and indication information for indicating a report quantity.

Optionally, in some implementations, the priority of the target information is determined based on protocol predefined information, preconfiguration information, or network device configuration information; or, the priority of the target information is the highest priority among preset priorities.

Optionally, in some implementations, the indication information for indicating CSI-RS transmission includes one or more of the following: CSI-RS resource set index information; CSI-RS resource index information; indication information for indicating repetition; and a first information field; when the value of the first information field is a first value, the first information field is for indicating CSI-RS transmission.

Optionally, in some implementations, the report quantity is one of the following: CRI, RSRP, SINR, CRI and RSRP, CRI and SINR, and not reporting.

Optionally, in some implementations, the first time interval is determined based on one or more of the following: protocol predefined information, preconfiguration information, network device configuration information, resource pool configuration information, PC5-RRC signaling, an indication sent by the first terminal device, and an indication sent by the second terminal device.

Optionally, in some implementations, the 1st CSI-RS resource is the 1st available CSI-RS resource after the first time interval starting from the first time unit.

Optionally, in some implementations, the second parameter is determined based on one or more of the following: protocol predefined information, preconfiguration information, network device configuration information, resource pool configuration information, PC5-RRC signaling, an indication sent by the first terminal device, and an indication sent by the second terminal device; and/or the third parameter is determined based on one or more of the following: protocol predefined information, preconfiguration information, network device configuration information, resource pool configuration information, PC5-RRC signaling, an indication sent by the first terminal device, and an indication sent by the second terminal device.

Optionally, in some implementations, the fourth parameter is determined based on one or more of the following: protocol predefined information; preconfiguration information; network device configuration information; resource pool configuration information; PC5-RRC signaling; an indication sent by the first terminal device; an indication sent by the second terminal device; a first number of spatial domain transmission filters supported by the first terminal device; a second number of spatial domain receive filters supported by the second terminal device; and a third number of CSI-RS resources for beam failure detection.

Optionally, in some implementations, if the first CSI-RS resource is used for determining a spatial domain transmission filter, the fourth parameter is determined based on the first number and/or the second number; or, if the first CSI-RS resource is used for determining a spatial domain receive filter, the fourth parameter is determined based on the first number and/or the second number; or, if the first CSI-RS resource is used for beam failure detection, the fourth parameter is determined based on the third number.

Optionally, in some implementations, the time-domain resources of other CSI-RS resources in the first CSI-RS resource, other than the 1st CSI-RS resource, are determined based on the time-domain position of the 1st CSI-RS resource and a fifth parameter, where the fifth parameter is determined based on the second parameter and/or the third parameter.

Optionally, in some implementations, the first CSI-RS resource includes multiple CSI-RS resources located at different time-domain positions, and the frequency-domain resources, code-domain resources, and CSI-RS sequences corresponding to the multiple CSI-RS resources are all the same.

Optionally, in some implementations, the first CSI-RS resource includes multiple CSI-RS resources located at different time-domain positions, and at least one of the frequency-domain resources, code-domain resources, and CSI-RS sequences corresponding to the multiple CSI-RS resources is different.

Optionally, in some implementations, CSI-RS resources in the first CSI-RS resource used for beam failure detection correspond to the same spatial domain transmission filter; or, CSI-RS resources in the first CSI-RS resource used for determining a spatial domain receive filter, correspond to the same spatial domain transmission filter; or, CSI-RS resources in the first CSI-RS resource used for determining a spatial domain transmission filter do not correspond to the same spatial domain transmission filter.

Optionally, in some implementations, CSI-RS resources in the first CSI-RS resource used for beam failure detection correspond to the same first spatial domain transmission filter, and the first spatial domain transmission filter is the spatial domain transmission filter for sidelink data transmission by the first terminal device.

Optionally, in some implementations, the first CSI-RS resource is determined based on configuration information, where the configuration information is determined based on one or more of the following: protocol predefined information, preconfiguration information, network device configuration information, resource pool configuration information, sidelink bandwidth part BWP configuration information, PC5-RRC signaling, indication information sent by the first terminal device, and indication information sent by the second terminal device.

Optionally, in some implementations, one CSI-RS resource in the first CSI-RS resource occupies the second-to-last symbol and third-to-last symbol in time-domain symbols available for sidelink transmission in a slot, and the data transmitted on the second-to-last symbol and the third-to-last time-domain symbol are the same.

FIG. 33 is a schematic structural diagram of an apparatus according to an embodiment of the disclosure. The dashed lines in FIG. 33 mean that the unit or module is optional. The apparatus 3300 can be configured to implement the methods described in the method embodiments mentioned above. The apparatus 3300 may be a chip or a terminal device.

The apparatus 3300 may include one or more processors 3310. The processor 3310 may support the apparatus 3300 to implement the methods described in the method embodiments mentioned above. The processor 3310 may be a general-purpose processor or a special-purpose processor. For example, the processor may be a central processing unit (CPU). Alternatively, the processor may also be other general-purpose processors, digital signal processors (DSP), application-specific integrated circuits (ASIC), field programmable gate arrays (FPGA), or other programmable logic devices, discrete gates or transistor logic devices, discrete hardware components, etc. A general-purpose processor may be a microprocessor, or the processor may also be any conventional processor, etc.

The apparatus 3300 may also include one or more memories 3320. The memory 3320 stores a program that can be executed by the processor 3310, causing the processor 3310 to perform the methods described in the method embodiments mentioned above. The memory 3320 may be independent of the processor 3310 or may be integrated in the processor 3310.

The apparatus 3300 may also include a transceiver 3330. The processor 3310 may communicate with other devices or chips through the transceiver 3330. For example, the processor 3310 may transmit and/or receive data with other devices or chips through the transceiver 3330.

The disclosure also provides a computer-readable storage medium for storing a program. The computer-readable storage medium may be applied to the terminal device provided in the embodiments of the disclosure, and the program causes the computer to execute the methods performed by the terminal device in various embodiments of the disclosure.

The disclosure also provides a computer program product. The computer program product includes a program. The computer program product may be applied to the terminal device provided in the embodiments of the disclosure, and the program causes the computer to execute the methods performed by the terminal device in various embodiments of the disclosure.

The disclosure also provides a computer program. The computer program may be applied to the terminal device provided in the embodiments of the disclosure, and the computer program causes the computer to execute the methods performed by the terminal device in various embodiments of the disclosure.

It should be understood that the terms "system" and "network" may be used interchangeably in the disclosure. In addition, the terms used in the disclosure are only for explaining the specific embodiments of the disclosure and are not intended to limit the disclosure. The terms "first," "second," "third," and "fourth," etc., used in the disclosure are for distinguishing different objects and are not intended to describe a specific order. In addition, the terms "comprise" and "have," as well as their any variations, are intended to cover non-exclusive inclusion.

In the embodiments of the disclosure, the term "indicate" may be a direct indication, an indirect indication, or an indication of an association. For example, A indicates B, which may mean that A directly indicates B (e.g., B can be obtained through A); it may also mean that A indirectly indicates B (e.g., A indicates C, and B can be obtained through C); or it may indicate that there is an association between A and B.

In the embodiments of the disclosure, "B corresponding to A" means that B is associated with A, and B can be determined based on A. However, it should also be understood that determining B based on A does not mean that B is determined solely based on A; B may also be determined based on A and/or other information.

In the embodiments of the disclosure, the term "corresponding" may indicate a direct correspondence or an indirect correspondence between two entities, or an association between them, or a relationship of indication and being indicated, configuration and being configured, etc.

In the embodiments of the disclosure, "predefined" or "preconfigured" may be implemented by pre-saving corresponding codes, tables, or other means that can indicate relevant information in a device (e.g., including a terminal device and a network device). The disclosure does not limit the specific implementation method. For example, predefined may refer to definitions in a protocol.

In the embodiments of the disclosure, the term "protocol" may refer to a standard protocol in the field of communications, such as LTE protocol, NR protocol, and protocols applicable to future communication systems. The disclosure does not limit this.

In the disclosure, the term "and/or" is merely a description of the relationship between associated objects, indicating that there may be three relationships. For example, A and/or B may mean: A exists alone, A and B exist together, or B exists alone. In addition, the character "/" in this application generally indicates an "or" relationship between the associated objects.

In the various embodiments of the disclosure, the order of the sequence numbers of the above processes does not imply the order of execution. The order of execution of each process should be determined based on its function and inherent logic, and should not limit the implementation process of the embodiments of the disclosure.

The units described as separate components may or may not be physically separate, and the components displayed as units may or may not be physical units, that is, they may be located in one place or distributed across multiple network units. The parts or all of the units may be selected according to actual needs to achieve the purpose of the solution of this embodiment.

In addition, the functional units in the various embodiments of the disclosure may be integrated into one processing unit, or each unit may exist physically separately, or two or more units may be integrated into one unit.

In the above embodiments, the processes may be fully or partially implemented by software, hardware, firmware, or any combination thereof. When implemented by software, they may be fully or partially realized in the form of a computer program product. The computer program product includes one or more computer instructions. When the computer program instructions are loaded and executed on a computer, the processes or functions in accordance with the embodiments of the disclosure are fully or partially generated. The computer may be a general-purpose computer, a special-purpose computer, a computer network, or other programmable devices. The computer instructions may be stored in a computer-readable storage medium, or transmitted from one computer-readable storage medium to another, for example, the computer instructions may be transmitted from one website, computer, server, or data center to another through wired (e.g., coaxial cable, fiber optic, digital subscriber line (DSL)) or wireless (e.g., infrared, wireless, microwave, etc.) means. The computer-readable storage medium may be any available medium that a computer can read, or a data storage device integrated with one or more available media, such as a server, data center, etc. The available media may be magnetic media (e.g., floppy disk, hard disk, magnetic tape), optical media (e.g., digital video disc (DVD)), or semiconductor media (e.g., solid-state disk (SSD)), etc.

The above description is merely a specific implementation manner of the disclosure, but the scope of protection of the disclosure is not limited thereto. Any changes or substitutions that can be easily thought of by those skilled in the art within the technical scope disclosed by the disclosure should be covered within the scope of protection of the disclosure. Therefore, the scope of protection of the disclosure should be subject to the scope of protection defined by the claims.

**Claims**

1. A method for sidelink transmission, comprising:

   determining, by a first terminal device or a second terminal device, a first channel state information-reference signal (CSI-RS) resource;
   wherein the first CSI-RS resource is a periodic or semi-persistent sidelink CSI-RS resource;
   wherein the first terminal device is configured to transmit a CSI-RS, and the second terminal device is configured to receive the CSI-RS.

2. The method according to claim 1, wherein the first CSI-RS resource is used for performing one or more of the following operations:

   determining a spatial domain transmission filter;
   determining a spatial domain receive filter,; and
   beam failure detection.

3. The method according to claim 2, wherein the first CSI-RS being used for determining the spatial domain transmission filter comprises one or more of the following:

   the first CSI-RS is used for determining an initial spatial domain transmission filter; or
   the first CSI-RS is used for determining a new spatial domain transmission filter after a beam failure occurs.

4. The method according to any one of claims 1 to 3, wherein the first CSI-RS resource is associated with one or more of the following:

   a periodic CSI-RS transmission opportunity; or
   a periodic CSI-RS transmission opportunity set.

5. The method according to claim 4, wherein one CSI-RS transmission opportunity set in the periodic CSI-RS transmission opportunity set comprises periodic CSI-RS transmission opportunities.

6. The method according to any one of claims 4 to 5, wherein the first CSI-RS resource is determined based on one or more of the following parameters:

   a first parameter for determining a time-domain position of a 1st CSI-RS resource in the first CSI-RS resource;
   a second parameter for indicating a period value corresponding to the periodic CSI-RS transmission opportunity;
   a third parameter for indicating a period value corresponding to the periodic CSI-RS transmission opportunity set; and
   a fourth parameter for indicating the number of CSI-RS transmission opportunities included in one CSI-RS transmission opportunity set in the periodic CSI-RS transmission opportunity set.

7. The method according to claim 6, wherein the first parameter comprises one or more of the following:

   a time-domain position of a first time-domain unit; or
   a first time interval.

8. The method according to claim 7, wherein the first time-domain unit is determined based on a time-domain unit where the target information is located and/or a reference time-domain unit indicated by the first terminal device, wherein the target information comprises one or more of the following:

   activation information for activating a CSI-RS resource;
   indication information for indicating CSI-RS transmission;

indication information for indicating to report CSI-RS resource information;

indication information for indicating to report beam failure information;

indication information for indicating to report reference signal received power (RSRP) or signal-to-interference-plus-noise ratio (SINR); or

indication information for indicating a report quantity.

9. The method according to claim 8, wherein:

a priority of the target information is determined based on protocol predefined information, preconfiguration information, or network device configuration information; or

the priority of the target information is a highest priority among predefined priorities.

10. The method according to claim 8 or 9, wherein the indication information for indicating CSI-RS transmission comprises one or more of the following:

CSI-RS resource set index information;

CSI-RS resource index information;

indication information for indicating repetition; or

a first information field;

wherein when a value of the first information field is a first value, the first information field is for indicating CSI-RS transmission.

11. The method according to any one of claims 8 to 10, wherein the report quantity is one of the following: CSI-RS resource indicator (CRI), RSRP, SINR, CRI and RSRP, CRI and SINR, and not reporting.

12. The method according to any one of claims 7 to 11, wherein the first time interval is determined based on one or more of the following: protocol predefined information, preconfiguration information, network device configuration information, resource pool configuration information, PC5 interface radio resource control (PC5-RRC) signaling, indication information sent by the first terminal device, and indication information sent by the second terminal device.

13. The method according to any one of claims 7 to 12, wherein the 1st CSI-RS resource is the 1st available CSI-RS resource after the first time interval starting from the first time unit.

14. The method according to any one of claims 6 to 13, wherein

the second parameter is determined based on one or more of the following: protocol predefined information, preconfiguration information, network device configuration information, resource pool configuration information, PC5-RRC signaling, indication information sent by the first terminal device, and indication information sent by the second terminal device; and/or

the third parameter is determined based on one or more of the following: protocol predefined information, preconfiguration information, network device configuration information, resource pool configuration information, PC5-RRC signaling, indication information sent by the first terminal device, and indication information sent by the second terminal device.

15. The method according to any one of claims 6 to 14, wherein the fourth parameter is determined based on one or more of the following:

protocol predefined information;

preconfiguration information;

network device configuration information;

resource pool configuration information;

PC5-RRC signaling;

indication information sent by the first terminal device;

indication information sent by the second terminal device;

a first number of spatial domain transmission filters supported by the first terminal device;

a second number of spatial domain receive filter,s supported by the second terminal device; and

a third number of CSI-RS resources for beam failure detection.

**16.** The method according to claim 15, wherein:

in response to the first CSI-RS resource being used for determining the spatial domain transmission filter, the fourth parameter is determined based on the first number and/or the second number; or
in response to the first CSI-RS resource being used for determining the spatial domain receive filter, the fourth parameter is determined based on the first number and/or the second number; or
in response to the first CSI-RS resource being used for beam failure detection, the fourth parameter is determined based on the third number.

**17.** The method according to any one of claims 6 to 16, wherein time-domain resources of other CSI-RS resources in the first CSI-RS resource, other than the 1st CSI-RS resource, are determined based on the time-domain position of the 1st CSI-RS resource and a fifth parameter, and the fifth parameter is determined based on the second parameter and/or the third parameter.

**18.** The method according to any one of claims 1 to 17, wherein the first CSI-RS resource comprises multiple CSI-RS resources located at different time-domain positions, and frequency-domain resources, code-domain resources, and CSI-RS sequences corresponding to the multiple CSI-RS resources are all the same.

**19.** The method according to any one of claims 1 to 17, wherein the first CSI-RS resource comprises multiple CSI-RS resources located at different time-domain positions, and at least one of frequency-domain resources, code-domain resources, and CSI-RS sequences corresponding to the multiple CSI-RS resources is different.

**20.** The method according to any one of claims 1 to 19, wherein

CSI-RS resources in the first CSI-RS resource used for beam failure detection correspond to a same spatial domain transmission filter; or
CSI-RS resources in the first CSI-RS resource used for determining a spatial domain receive filter, correspond to a same spatial domain transmission filter; or
CSI-RS resources in the first CSI-RS resource used for determining a spatial domain transmission filter do not correspond to a same spatial domain transmission filter.

**21.** The method according to claim 20, wherein CSI-RS resources in the first CSI-RS resource used for beam failure detection correspond to a same first spatial domain transmission filter, and the first spatial domain transmission filter is a spatial domain transmission filter for sidelink data transmission of the first terminal device.

**22.** The method according to any one of claims 1 to 21, wherein the first CSI-RS resource is determined based on configuration information, and the configuration information is determined based on one or more of the following: protocol predefined information, preconfiguration information, network device configuration information, resource pool configuration information, sidelink bandwidth part (BWP) configuration information, PC5-RRC signaling, indication information sent by the first terminal device, and indication information sent by the second terminal device.

**23.** The method according to any one of claims 1 to 22, wherein one CSI-RS resource in the first CSI-RS resource occupies a second-to-last symbol and third-to-last symbol in time-domain symbols available for sidelink transmission in a slot, and data transmitted on the second-to-last symbol and the third-to-last symbol are the same.

**24.** A terminal device, wherein the terminal device is a first terminal device or a second terminal device, the terminal device comprising:

a determining module, configured to determine a first channel state information-reference signal (CSI-RS) resource;
wherein the first CSI-RS resource is a periodic or semi-persistent sidelink CSI-RS resource;
wherein the first terminal device is configured to transmit a CSI-RS, and the second terminal device is configured to receive the CSI-RS.

**25.** The terminal device according to claim 24, wherein the first CSI-RS resource is used for performing one or more of the following operations:

determining a spatial domain transmission filter;

determining a spatial domain receive filter,; and
beam failure detection.

26. The terminal device according to claim 25, wherein the first CSI-RS being used for determining the spatial domain transmission filter comprises one or more of the following:

the first CSI-RS is used for determining an initial spatial domain transmission filter; or
the first CSI-RS is used for determining a new spatial domain transmission filter after a beam failure occurs.

27. The terminal device according to any one of claims 24 to 26, wherein the first CSI-RS resource is associated with one or more of the following:

a periodic CSI-RS transmission opportunity; or
a periodic CSI-RS transmission opportunity set.

28. The terminal device according to claim 27, wherein one CSI-RS transmission opportunity set in the periodic CSI-RS transmission opportunity set comprises periodic CSI-RS transmission opportunities.

29. The terminal device according to any one of claims 27 to 28, wherein the first CSI-RS resource is determined based on one or more of the following parameters:

a first parameter for determining a time-domain position of a $1^{st}$ CSI-RS resource in the first CSI-RS resource;
a second parameter for indicating a period value corresponding to the periodic CSI-RS transmission opportunity;
a third parameter for indicating a period value corresponding to the periodic CSI-RS transmission opportunity set; and
a fourth parameter for indicating the number of CSI-RS transmission opportunities included in one CSI-RS transmission opportunity set in the periodic CSI-RS transmission opportunity set.

30. The terminal device according to claim 29, wherein the first parameter comprises one or more of the following:

a time-domain position of a first time-domain unit; or
a first time interval.

31. The terminal device according to claim 30, wherein the first time-domain unit is determined based on a time-domain unit where the target information is located and/or a reference time-domain unit indicated by the first terminal device, wherein the target information comprises one or more of the following:

activation information for activating a CSI-RS resource;
indication information for indicating CSI-RS transmission;
indication information for indicating to report CSI-RS resource information;
indication information for indicating to report beam failure information;
indication information for indicating to report reference signal received power (RSRP) or signal-to-interference-plus-noise ratio (SINR); or
indication information for indicating a report quantity.

32. The terminal device according to claim 31, wherein:

a priority of the target information is determined based on protocol predefined information, preconfiguration information, or network device configuration information; or
the priority of the target information is a highest priority among predefined priorities.

33. The terminal device according to claim 31 or 32, wherein the indication information for indicating CSI-RS transmission comprises one or more of the following:

CSI-RS resource set index information;
CSI-RS resource index information;
indication information for indicating repetition; or
a first information field;

wherein when a value of the first information field is a first value, the first information field is for indicating CSI-RS transmission.

34. The terminal device according to any one of claims 31 to 33, wherein the report quantity is one of the following: CSI-RS resource indicator (CRI), RSRP, SINR, CRI and RSRP, CRI and SINR, and not reporting.

35. The terminal device according to any one of claims 30 to 34, wherein the first time interval is determined based on one or more of the following: protocol predefined information, preconfiguration information, network device configuration information, resource pool configuration information, PC5 interface radio resource control (PC5-RRC) signaling, indication information sent by the first terminal device, and indication information sent by the second terminal device.

36. The terminal device according to any one of claims 30 to 35, wherein the 1st CSI-RS resource is the 1st available CSI-RS resource after the first time interval starting from the first time unit.

37. The terminal device according to any one of claims 29 to 36, wherein:

the second parameter is determined based on one or more of the following: protocol predefined information, preconfiguration information, network device configuration information, resource pool configuration information, PC5-RRC signaling, indication information sent by the first terminal device, and indication information sent by the second terminal device; and/or
the third parameter is determined based on one or more of the following: protocol predefined information, preconfiguration information, network device configuration information, resource pool configuration information, PC5-RRC signaling, indication information sent by the first terminal device, and indication information sent by the second terminal device.

38. The terminal device according to any one of claims 29 to 37, wherein the fourth parameter is determined based on one or more of the following:

protocol predefined information;
preconfiguration information;
network device configuration information;
resource pool configuration information;
PC5-RRC signaling;
indication information sent by the first terminal device;
indication information sent by the second terminal device;
a first number of spatial domain transmission filters supported by the first terminal device;
a second number of spatial domain receive filter,s supported by the second terminal device; and
a third number of CSI-RS resources for beam failure detection.

39. The terminal device according to claim 38, wherein:

in response to the first CSI-RS resource being used for determining the spatial domain transmission filter, the fourth parameter is determined based on the first number and/or the second number; or
in response to the first CSI-RS resource being used for determining the spatial domain receive filter, the fourth parameter is determined based on the first number and/or the second number; or
in response to the first CSI-RS resource being used for beam failure detection, the fourth parameter is determined based on the third number.

40. The terminal device according to any one of claims 29 to 39, wherein time-domain resources of other CSI-RS resources in the first CSI-RS resource, other than the 1st CSI-RS resource, are determined based on the time-domain position of the 1st CSI-RS resource and a fifth parameter, and the fifth parameter is determined based on the second parameter and/or the third parameter.

41. The terminal device according to any one of claims 24 to 40, wherein the first CSI-RS resource comprises multiple CSI-RS resources located at different time-domain positions, and frequency-domain resources, code-domain resources, and CSI-RS sequences corresponding to the multiple CSI-RS resources are all the same.

42. The terminal device according to any one of claims 24 to 40, wherein the first CSI-RS resource comprises multiple CSI-RS resources located at different time-domain positions, and at least one of frequency-domain resources, code-domain resources, and CSI-RS sequences corresponding to the multiple CSI-RS resources is different.

43. The terminal device according to any one of claims 24 to 42, wherein:

CSI-RS resources in the first CSI-RS resource used for beam failure detection correspond to a same spatial domain transmission filter; or
CSI-RS resources in the first CSI-RS resource used for determining a spatial domain receive filter, correspond to a same spatial domain transmission filter; or
CSI-RS resources in the first CSI-RS resource used for determining a spatial domain transmission filter do not correspond to a same spatial domain transmission filter.

44. The terminal device according to claim 43, wherein CSI-RS resources in the first CSI-RS resource used for beam failure detection correspond to a same first spatial domain transmission filter, and the first spatial domain transmission filter is a spatial domain transmission filter for sidelink data transmission of the first terminal device.

45. The terminal device according to any one of claims 24 to 44, wherein the first CSI-RS resource is determined based on configuration information, and the configuration information is determined based on one or more of the following: protocol predefined information, preconfiguration information, network device configuration information, resource pool configuration information, sidelink bandwidth part (BWP) configuration information, PC5-RRC signaling, indication information sent by the first terminal device, and indication information sent by the second terminal device.

46. The terminal device according to any one of claims 24 to 45, wherein one CSI-RS resource in the first CSI-RS resource occupies a second-to-last symbol and third-to-last symbol in time-domain symbols available for sidelink transmission in a slot, and data transmitted on the second-to-last symbol and the third-to-last symbol are the same.

47. A terminal device, comprising a transceiver, a memory, and a processor, wherein the memory is configured to store a program, the processor is configured to call the program stored in the memory, and control the transceiver to receive or transmit signals, to make the terminal device perform the method according to any one of claims 1 to 23.

48. An apparatus, comprising a processor configured to call a program from a memory, to make the apparatus perform the method according to any one of claims 1 to 23.

49. A chip, comprising a processor configured to call a program from a memory, to make a device equipped with the chip perform the method according to any one of claims 1 to 23.

50. A computer-readable storage medium storing a program, wherein the program causes a computer to perform the method according to any one of claims 1 to 23.

51. A computer program product, comprising a program, wherein the program causes a computer to perform the method according to any one of claims 1 to 23.

52. A computer program, wherein the computer program causes a computer to perform the method according to any one of claims 1 to 23.

100

110

120

FIG. 1

110

120a ← SL Communication → 120a

FIG. 2

110

120a

SL Communication

120b

FIG. 3

120b

SL Communication

120b

FIG. 4

Communication Group

Terminal Device 1

Resource Allocation

Resource Allocation

Terminal Device 2

SL Communication

Terminal Device 3

FIG. 5

Terminal Device 2

Terminal Device 6

Terminal Device 3

Terminal Device **1**

Terminal Device 5

Terminal Device 4

FIG. 6

Terminal Device 1

Terminal Device 2

SL Data

FIG. 7

Communication
Group

Terminal
Device 2

Terminal
Device 1

Terminal
Device 3

Terminal
Device 4

FIG. 8

FIG. 9A

FIG. 9B

| Resources occupied by second-order SCI | Resources occupied by PSSCH reference signals |
| Resources occupied by CSI-RS | Resources occupied by AGC |

PSSCH

RE11
RE10
RE9
RE8
RE7
RE6
RE5
RE4
RE3
RE2
RE1
RE0

0   1   2   3   4   5   6   7   8   9   10   11   12   13

FIG. 10

1110

1

5

2

3

4

FIG. 11

1210

1211

1214

1213

1212

Moment 1

Moment 2

Moment 3

Moment 4

1

5

2

3

4

FIG. 12

RRC

↓

| N candidate TCI states |

MAC

↓

| K activated TCI states |

DCI

↓

| one or two used TCI states |

FIG. 13

| AGC | | | | | PSSCH | | | | | GP | CSI-RS | GP |
| PSCCH |

FIG. 14

Not available for SL
transmission

| AGC | | | | PSSCH | | | GP | CSI-RS | GP | | | |
| PSCCH |

FIG. 15

Slot 0    Slot 1    Slot 2    Slot 3    Slot 4    Slot 5    Slot 6    Slot 7

⬚ PSCCH    ⬚ PSSCH    ⬚ CSI-RS    ⬚ GP

FIG. 16

PRB →

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

Bitmap    1 1 1 0 0 1 1 1 0 0 1 1 1 0 0 1 1 1 0 0 1 1 1 0 0

⬚ PRBs available for PSFCH          ⬚ PRBs available for CSI-RS

FIG. 17

Start PRB

Frequency-domain length is 10 PRBs

PRB →

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

⬚ PRBs available for PSFCH          ⬚ PRBs available for CSI-RS

FIG. 18

Start PRB

Frequency-domain length is 10 PRBs

PRB

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

PRBs available for PSFCH

PRBs available for CSI-RS

FIG. 19

First terminal device or second terminal device determines first CSI-RS resource

2010

FIG. 20

FIG. 21

CSI-RS resources used for determining transmission beams

CSI-RS resources used for determining reception beams

FIG. 22

First set of CSI-RS resouces

P21 P21 P21

P11

P11

Second set of CSI-RS resources

P22

P12

P12

☐ CSI-RS resources used for
determining transmission beams

☐ CSI-RS resources used for
determining reception beams

FIG. 23

P3 P3 P3

t

FIG. 24

Start     Expire     Restart     Restart

First timer

First timer

First timer

First timer

B
F
I

B
F
I

B
F
I

Slot a     Slot b     Slot c     Slot d     t

Cnt=0     Cnt=1     Cnt=0     Cnt=1     Cnt=2

Determine beam failure

FIG. 25

First terminal device

Second terminal device

S2610 First information
(include beam failure indication information)

FIG. 26

Beam failure indication information

a    b

t

◻ CSI-RS resources used for beam failure detection

◻ PSFCH slot

FIG. 27

Beam failure indication information

CSI-RS Resource 0    CSI-RS Resource 1    CSI-RS Resource 2    CSI-RS Resource 3    CSI-RS Resource 0    CSI-RS Resource 1    CSI-RS Resource 2    CSI-RS Resource 3

Optimal beam

Determine beam failure

a    b    c

t

◻ CSI-RS resources used for beam selection

◻ CSI-RS resources used for beam failure detection

◻ PSFCH slot

FIG. 28

FIG. 29

FIG. 30

FIG. 31

Terminal Device  3200

Determining Module 3210

FIG. 32

Apparatus 3300

Processor
3310

Memory
3320

Transceiver
3330

FIG. 33

## INTERNATIONAL SEARCH REPORT

| International application No. |
|---|
| **PCT/CN2023/072685** |

### A. CLASSIFICATION OF SUBJECT MATTER

H04W 72/25(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 3GPP: 参考信号, 侧行, 旁链, 边链, 空域, 滤波器, 周期, 信道状态信息, 资源, 半静态, CSI, RS, filter, parameter, sidelink, spatial

### C. DOCUMENTS CONSIDERED TO BE RELEVANT

| Category* | Citation of document, with indication, where appropriate, of the relevant passages | Relevant to claim No. |
|---|---|---|
| E | WO 2023023946 A1 (GUANGDONG OPPO MOBILE COMMUNICATIONS CO., LTD.) 02 March 2023 (2023-03-02) description, page 2 line 24-page 24 line 24 | 1-2, 20, 22, 24-25, 43, 45, 47-52 |
| X | CN 113286371 A (GUANGDONG OPPO MOBILE COMMUNICATIONS CO., LTD.) 20 August 2021 (2021-08-20) description, paragraphs [0032]-[0181] | 1-52 |
| X | CN 111436131 A (HUAWEI TECHNOLOGIES CO., LTD.) 21 July 2020 (2020-07-21) description, paragraphs [0107]-[0346] | 1-52 |
| A | CN 114760017 A (SHANGHAI LANGBO COMMUNICATION TECHNOLOGY CO., LTD.) 15 July 2022 (2022-07-15) entire document | 1-52 |
| A | US 2022210779 A1 (SAMSUNG ELECTRONICS CO., LTD.) 30 June 2022 (2022-06-30) entire document | 1-52 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072685**

| Patent document cited in search report | | | Publication date (day/month/year) | Patent family member(s) | | | Publication date (day/month/year) |
|---|---|---|---|---|---|---|---|
| WO | 2023023946 | A1 | 02 March 2023 | None | | | |
| CN | 113286371 | A | 20 August 2021 | WO | 2020143059 | A1 | 16 July 2020 |
| CN | 111436131 | A | 21 July 2020 | EP | 3905817 | A1 | 03 November 2021 |
| | | | | EP | 3905817 | A4 | 16 March 2022 |
| | | | | KR | 20210111845 | A | 13 September 2021 |
| | | | | US | 2021337514 | A1 | 28 October 2021 |
| | | | | WO | 2020143750 | A1 | 16 July 2020 |
| CN | 114760017 | A | 15 July 2022 | WO | 2022148428 | A1 | 14 July 2022 |
| US | 2022210779 | A1 | 30 June 2022 | WO | 2022139542 | A1 | 30 June 2022 |
| | | | | KR | 20220092187 | A | 01 July 2022 |

Form PCT/ISA/210 (patent family annex) (July 2022)